# EUROPEAN PATENT SPECIFICATION

(11) **EP 3 179 778 B1**
(45) Date of publication and mention of the grant of the patent: **03.11.2021**
(21) Application number: 14899197.9
(22) Date of filing: 26.09.2014
(51) Int. Cl.: H04W 8/00, H04W 8/24, H04W 72/08, H04W 76/14

(54) **METHOD AND APPARATUS FOR REPORTING AND PROCESSING PROXIMITY SERVICE CAPABILITY INFORMATION**
VERFAHREN UND VORRICHTUNG ZUR MELDUNG UND VERARBEITUNG VON PROXIMITÄTSDIENSTKAPAZITÄTSINFORMATION
PROCÉDÉ ET APPAREIL DE CRÉATION DE RAPPORT ET DE TRAITEMENT D'INFORMATIONS DE CAPACITÉ DE SERVICE DE PROXIMITÉ

(30) Priority: 08.08.2014 CN 201410390140
(43) Date of publication of application: 14.06.2017
(73) Proprietor: ZTE Corporation, Shenzhen, Guangdong 518057 (CN)
(72) Inventor: LUO, Wei, Shenzhen Guangdong 518057 (CN); CHEN, Yuqin, Shenzhen Guangdong 518057 (CN); CHEN, Lin, Shenzhen Guangdong 518057 (CN); DU, Zhongda, Shenzhen Guangdong 518057 (CN)
(74) Representative: Zoli, Filippo
(86) International application number: PCT/CN2014/087611
(87) International publication number: WO 2016/019621

(56) References cited:
- EP-A1- 2 665 298
- EP-A2- 2 753 133
- CN-A- 102 547 881
- CN-A- 103 889 035
- US-A1- 2013 109 301
- "D2D capability for multi-carrier capable UE", 3GPP DRAFT; R2-142634 [D2D-C] D2D CAPABILITY FOR MULTI-CARRIER CAPABLE UE [STAGE2]_R2, 3RD GENERATION PARTNERSHIP PROJECT (3GPP), MOBILE COMPETENCE CENTRE ; 650, ROUTE DES LUCIOLES ; F-06921 SOPHIA-AN , vol. RAN WG2, no. Seoul, Korea; 20140519 - 20140523 18 May 2014 (2014-05-18), XP050790453, Retrieved from the Internet: URL:http://www.3gpp.org/ftp/Meetings_3GPP_ SYNC/RAN1/RAN2/Docs/ [retrieved on 2014-05-18]
- ERICSSON: "Discussion on UE Multi-Carrier D2D Capabilities", 3GPP DRAFT; R1-142407 D2D CAPABILITIES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Seoul, Korea; 20140519 - 20140523 18 May 2014 (2014-05-18), XP050788002, Retrieved from the Internet: URL:http://www.3gpp.org/ftp/Meetings_3GPP_ SYNC/RAN1/Docs/ [retrieved on 2014-05-18]
- QUALCOMM INCORPORATED: "Indication of UE ProSe capability", 3GPP DRAFT; C1-142186, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. CT WG1, no. Phoenix; 20140519 - 20140523 26 May 2014 (2014-05-26), XP050808035, Retrieved from the Internet: URL:http://www.3gpp.org/ftp/tsg_ct/WG1_mm- cc-sm_ex-CN1/TSGC1_87_Phoenix/docs/ [retrieved on 2014-05-26]
- None

## Description

### Technical Field

The present disclosure relates to the field of communication, in particular to methods and apparatuses for reporting and processing information about a proximity service supporting capability.

### Background

With the rapid development of wireless multimedia services, on one hand, the demands of people for high data rate and user experience gradually increase and thereby higher requirements are attached to system capacity and coverage of traditional cellular networks. On the other hand, application scenarios such as public security, social network, short-range data share and local advertisement enable the demands of people for Proximity Services (ProSe for short) for understanding people or things nearby and communicating therewith to gradually increase. The traditional cellular networks which take base stations as centers are obviously limited in aspects of high data rate and proximity service supporting. Under such demand background, a ProSe technology which represents a new development direction of communication in future emerges at the right moment. The application of the ProSe technology can reduce the burden of the cellular networks, decrease battery power consumption of user equipment, improve data rate, effectively improve the robustness of network infrastructure and very well satisfy the requirements on high data rate and proximity services.

The ProSe technology can work at licensed bands or unlicensed bands and allow a plurality of user equipment supporting a ProSe function to perform direct discovery/direct communication under a situation that there is network infrastructure or there is no network infrastructure, herein the user equipment supporting the ProSe function are also called as ProSe User Equipment (ProSe UE for short).

The ProSe technology usually can include a ProSe discovery technology and a ProSe communication technology, herein the ProSe discovery technology refers to a technology which is used for judging/determining that two or more ProSe user equipment are mutually proximate, e.g., in a range that ProSe direct communication can be performed, or which is used for judging/determining that first user equipment is proximate to second user equipment. Under normal situations, the ProSe user equipment can discover each other by transmitting or receiving discovery signals/information. Under a situation that there is cellular network coverage, networks can assist the ProSe user equipment to perform ProSe discovery. The ProSe communication technology refers to a technology that partial or all communication data between the ProSe user equipment can be directly communicated without relying on network infrastructure.

UE which supports the ProSe discovery technology and the ProSe communication technology may be simultaneously in cellular communication and ProSe communication states, or may be simultaneously in cellular communication and ProSe discovery signal transmitting/monitoring states, i.e., while the UE and a base station are kept in cellular communication, data of a ProSe broadcasting service further need to be monitored and a discovery signal needs to be transmitted or transmitting signals transmitted by other UE need to be monitored. In a ProSe communication process, two UE which perform ProSe communication are called as a ProSe UE pair, and each UE can be called ProSe opposite-end UE relative to the other UE. In a ProSe discovery process, UE which transmits a discovery signal is called as transmitting UE or declaration UE, and UE which receives the discovery signal is called as receiving UE or monitoring UE.

Since ProSe services are not unified in the whole network in a network deployment process, a situation that frequencies in partial areas support ProSe services but frequencies in adjacent areas do not support ProSe service. And similarly, not all UE can support a ProSe communication/discovery function, for example, under a situation that some neighboring cells support ProSe services and some neighboring cells do not support ProSe services, an effect that cells which support ProSe are preferably selected for UE which support ProSe services and UE which do not support ProSe services do not need to consider whether switched cells support ProSe cannot be realized in a switching process.

In addition, when a ProSe terminal is in a monitoring state, if a base station does not know that the terminal is monitoring ProSe services, ProSe monitoring services may be interfered when the base station schedules terminal unicast resources. In addition, in the existing technology, the problem of how UE specifically report information about whether proximity services are supported is not solved. Since the above-mentioned problem exists in the related technology, the base station needs to know whether the UE has a ProSe supporting capability.

The document, 3GPP TSG-RAN WG2 #86, Seoul, Korea, 19-23 May 2014, R2-142634, discusses UE capability signaling related to D2D operation.

The document, 3GPP TSG RAN WG 1 Meeting #77, Seoul, Korea, 19th-23rd May 2014, R1-142407, discusses UE multi-carrier D2D capabilities.

The document EP 2665298 A1 discloses a method of a wireless communication device adapted to perform device-to-device communication. The method comprises transmitting an indication of device-to-device communication capability to a network node, receiving one or more beacon parameters allocated to one or more second wireless communication devices adapted to perform device-to-device communication, monitoring device-to-device communication beacon signaling based on the received beacon parameters, and performing at least one radio operation task based on measurements of the monitored device-to-device communication beacon signaling.

The document US 2013/0109301 A1 discloses a method including obtaining, by a user terminal capable to perform direct device-to-device, D2D, communication with another user terminal, information indicating tracking area-specific resources for a D2D discovery process; and applying the obtained tracking area-specific resources in performing the D2D discovery process within the tracking area, wherein the D2D discovery process is for discovering D2D communication capable devices in the tracking area over an air interface of a cellular network.

The document, 3GPP TSG-CT WG1 Meeting #87, Phoenix (AZ), USA, 19-23 May 2014, C1-142186, proposes to add the ProSe capability in the "UE Network Capability" IE.

### Summary

The present invention provides methods and apparatuses for reporting and processing information about a proximity service supporting capability according to the independent claims, so as to at least solve the problem that a base station cannot know whether a UE has a ProSe capability in the related technology. Further improvements and embodiments are provided in the dependent claims.

The present disclosure also discloses a method for reporting information about a proximity service supporting capability. The method for reporting the information about the proximity service supporting capability includes: a first communication node determining indication information to be reported, herein the indication information is used for indicating information about a proximity service supporting capability of the first communication node; and the first communication node reporting the indication information to a second communication node.

In an exemplary implementation, the information about the proximity service supporting capability includes at least one of the following: indication information about supporting a proximity service; indication information about supporting proximity service receiving and/or transmitting; indication information about all bands which correspond to all indicated bands and on which receiving and/or transmitting proximity services is supported; indication information about uplink bands which correspond to all indicated bands and on which receiving and/or transmitting proximity services is supported; indication information about downlink bands which correspond to all indicated bands and on which receiving and/or transmitting proximity services is supported; indication information about all bands which correspond to specially indicated bands and on which receiving and/or transmitting proximity services is supported; indication information about uplink bands which correspond to specially indicated bands and on which receiving and/or transmitting proximity services is supported; indication information about downlink bands which correspond to specially indicated bands and on which receiving and/or transmitting proximity services is supported; indication information about a parameter combination consisting of a band parameter set of bands for cellular communication and a band parameter set of bands for proximity services, in which the cellular communication and the proximity services are supported to be performed simultaneously; band class information of bands supporting proximity services; a band parameter set of bands on which simultaneous reception of cellular communication and proximity services is supported; a band parameter set of bands on which receiving and/or transmitting proximity services is supported; indication information about having a receiver dedicated for supporting a proximity service; indication information about having a transmitter dedicated for supporting a proximity service; indication information about the number of all receiving links; indication information about the number of all transmitting links; indication information about the number of receiving links supporting proximity services; indication information about the number of transmitting links supporting proximity services; indication information about whether gaps are required when proximity services are received on indicated bands; and indication information about whether proximity services are capable of being received simultaneously or in parallel on indicated bands. Herein, the proximity service comprise at least one of the following: a ProSe discovery and a ProSe communication; the uplink band is a uplink frequency configured in a system to which the first communication node is connected or in which the first communication node resides currently; the downlink band is a downlink frequency configured in a system to which the first communication node is connected or in which the first communication node resides currently; and the system comprises at least one of the following: Evolved Universal Terrestrial Radio Access, EUTRA, and Universal Terrestrial Radio Access, UTRA

In an exemplary implementation, before the first communication node determines the indication information, the method further includes: the first communication node pre-configuring with the second communication node to complete a corresponding relationship between all band ranges supported by the first communication node and band index value combinations, herein in the corresponding relationship each band range respectively corresponds to a band index value.

In an exemplary implementation, the first communication node determining the indication information includes one of the following: the first communication node determining that a first index value combination and a second index value combination need to be reported to the second communication node under a situation that the first communication node supports simultaneously receiving and transmitting EUTRA network data in a band range corresponding to the first index value combination and receiving and transmitting proximity service data in a band range corresponding to the second index value combination, wherein each of the first index value combination and the second index value combination comprises one or more index values, and each index value in the one or more index values is respectively carried in a band parameter information unit; and the first communication node determining that a first index value combination or a second index value combination needs to be reported to the second communication node under a situation that the first communication node does not support simultaneously receiving and transmitting EUTRA network data in a band range corresponding to the first index value combination and receiving and transmitting proximity service data in a band range corresponding to the second index value combination, wherein each of the first index value combination and the second index value combination comprises one or more index values, and each index value in the one or more index values is respectively carried in a band parameter information unit.

In an exemplary implementation, before the first communication node determines the indication information, the method further includes: the first communication node pre-configuring with the second communication node to complete a corresponding relationship between all proximity service band ranges supported by a receiver and/or transmitter dedicated for a proximity service and band index values, herein in the corresponding relationship each proximity service band range respectively corresponds to a band index value, and the proximity service comprises at least one of the following: a ProSe discovery and a ProSe communication.

In an exemplary implementation, the first communication node determining the indication information includes at least one of the following: the first communication node determining that indication information about having the receiver and/or transmitter dedicated for the proximity service needs to be reported to the second communication node under a situation that the first communication node configures with the receiver and/or transmitter dedicated for the proximity service; and the first communication node determining that the plurality of index value combinations needs to be reported to the second communication node under a situation that the first communication node acquires index values corresponding to various bands from the corresponding relationship when the receiver and/or transmitter dedicated for the proximity service configured by the first communication node works at a plurality of bands.

In an exemplary implementation, the first communication node reporting the indication information to the second communication node includes at least one of the following: the first communication node reporting the indication information to the second communication node after receiving a request message from the second communication node, wherein the request message is used for acquiring the information about the proximity service supporting capability; and the first communication node reporting actively the indication information to the second communication node.

The present disclosure also discloses a method for processing information about a proximity service supporting capability.

The method for processing the information about the proximity service supporting capability according to an implementation of the present disclosure includes: a second communication node receiving indication information reported by a first communication node, herein the indication information is used for indicating information about a proximity service supporting capability of the first communication node; and the second communication node allocating a proximity service resource and/or a cellular network service resource to the first communication node according to the indication information.

In an exemplary implementation, the information about the proximity service supporting capability includes at least one of the following: indication information about supporting a proximity service; indication information about supporting proximity service receiving and/or transmitting; indication information about all bands which correspond to all indicated bands and on which receiving and/or transmitting proximity services is supported; indication information about uplink bands which correspond to all indicated bands and on which receiving and/or transmitting proximity services is supported; indication information about downlink bands which correspond to all indicated bands and on which receiving and/or transmitting proximity services is supported; indication information about all bands which correspond to specially indicated bands and on which receiving and/or transmitting proximity services is supported; indication information about uplink bands which correspond to specially indicated bands and on which receiving and/or transmitting proximity services is supported; indication information about downlink bands which correspond to specially indicated bands and on which receiving and/or transmitting proximity services is supported; indication information about a parameter combination consisting of a band parameter set of bands for cellular communication and a band parameter set of bands for proximity services, in which the cellular communication and the proximity services are supported to be performed simultaneously; band class information of bands supporting proximity services; a band parameter set of bands on which simultaneous reception of cellular communication and proximity services is supported; a band parameter set of bands on which receiving and/or transmitting proximity services is supported; indication information about having a receiver dedicated for supporting a proximity service; indication information about having a transmitter dedicated for supporting a proximity service; indication information about the number of all receiving links; indication information about the number of all transmitting links; indication information about the number of receiving links supporting proximity services; indication information about the number of transmitting links supporting proximity services; indication information about whether gaps are required when proximity services are received on indicated bands; and indication information about whether proximity services are capable of being received simultaneously or in parallel on indicated bands. Herein, the proximity service comprise at least one of the following: a ProSe discovery and a ProSe communication; the uplink band is a uplink frequency configured in a system to which the first communication node is connected or in which the first communication node resides currently; the downlink band is a downlink frequency configured in a system to which the first communication node is connected or in which the first communication node resides currently; and the system comprises at least one of the following: Evolved Universal Terrestrial Radio Access, EUTRA, and Universal Terrestrial Radio Access, UTRA

In an exemplary implementation, the second communication node allocating the proximity service resource and/or the cellular network service resource to the first communication node according to the indication information includes: the second communication node determining that the first communication node has the proximity service supporting capability but does not support receiving and transmitting service data simultaneously in a plurality of band ranges according to the indication information; and the second communication node allocating the proximity service resource and the cellular network service resource to the first communication node through a time-division multiplexing mode; or the second communication node allocating a ProSe discovery resource and the cellular network service resource to the first communication node only through the time-division multiplexing mode.

In an exemplary implementation, the second communication node allocating the proximity service resource and/or the cellular network service resource to the first communication node according to the indication information includes: the second communication node determining that the first communication node has the proximity service supporting capability and supports simultaneously receiving and transmitting service data in a plurality of band ranges according to the indication information; and the second communication node allocating the proximity service resource and the cellular network service resource to the first communication node through a time-division multiplexing mode; or the second communication node allocating the proximity service resource and the cellular network service resource to the first communication node through a frequency-division multiplexing mode; or the second communication node allocating a ProSe discovery resource and the cellular network service resource to the first communication node through the time-division multiplexing mode and allocating a ProSe communication resource and the cellular network service resource to the first communication node through the frequency-division multiplexing mode.

In an exemplary implementation, the second communication node receiving the indication information reported by the first communication node includes one of the following: the second communication node receiving the indication information reported by the first communication node after transmitting a request message to the first communication node, wherein the request message is used for acquiring the information about the proximity service supporting capability; and the second communication node receiving the indication information actively reported by the first communication node.

The present disclosure also discloses an apparatus for reporting information about a proximity service supporting capability.

The apparatus for reporting the information about the proximity service supporting capability according to an implementation of the present disclosure includes the following modules. A determination module is arranged to determine indication information to be reported, wherein the indication information is used for indicating information about a proximity service supporting capability of the first communication node. A reporting module is arranged to report the indication information to a second communication node.

In an exemplary implementation, the information about the proximity service supporting capability includes at least one of the following: indication information about supporting a proximity service; indication information about supporting proximity service receiving and/or transmitting; indication information about all bands which correspond to all indicated bands and on which receiving and/or transmitting proximity services is supported; indication information about uplink bands which correspond to all indicated bands and on which receiving and/or transmitting proximity services is supported; indication information about downlink bands which correspond to all indicated bands and on which receiving and/or transmitting proximity services is supported; indication information about all bands which correspond to specially indicated bands and on which receiving and/or transmitting proximity services is supported; indication information about uplink bands which correspond to specially indicated bands and on which receiving and/or transmitting proximity services is supported; indication information about downlink bands which correspond to specially indicated bands and on which receiving and/or transmitting proximity services is supported; indication information about a parameter combination consisting of a band parameter set of bands for cellular communication and a band parameter set of bands for proximity services, in which the cellular communication and the proximity services are supported to be performed simultaneously; band class information of bands supporting proximity services; a band parameter set of bands on which simultaneous reception of cellular communication and proximity services is supported; a band parameter set of bands on which receiving and/or transmitting proximity services is supported; indication information about having a receiver dedicated for supporting a proximity service; indication information about having a transmitter dedicated for supporting a proximity service; indication information about the number of all receiving links; indication information about the number of all transmitting links; indication information about the number of receiving links supporting proximity services; indication information about the number of transmitting links supporting proximity services; indication information about whether gaps are required when proximity services are received on indicated bands; and indication information about whether proximity services are capable of being received simultaneously or in parallel on indicated bands. Herein, the proximity service comprise at least one of the following: a ProSe discovery and a ProSe communication; the uplink band is a uplink frequency configured in a system to which the first communication node is connected or in which the first communication node resides currently; the downlink band is a downlink frequency configured in a system to which the first communication node is connected or in which the first communication node resides currently; and the system comprises at least one of the following: Evolved Universal Terrestrial Radio Access, EUTRA, and Universal Terrestrial Radio Access, UTRA

In an exemplary implementation, the above-mentioned apparatus further includes: a first configuration module, which is arranged to pre-configure with the second communication node to complete a corresponding relationship between all band ranges supported by the first communication node and band index value combinations, wherein in the corresponding relationship each band range respectively corresponds to a band index value.

In an exemplary implementation, the determination module is arranged to determine the indication information according to one of the following: determining that a first index value combination and a second index value combination need to be reported to the second communication node under a situation of simultaneously supporting receiving and transmitting EUTRA network data in a band range corresponding to the first index value combination and receiving and transmitting proximity service data in a band range corresponding to the second index value combination, wherein each of the first index value combination and the second index value combination comprises one or more index values, and each index value in the one or more index values is respectively carried in a band parameter information unit; and determining that a first index value combination or a second index value combination needs to be reported to the second communication node under a situation of not supporting simultaneously receiving and transmitting EUTRA network data in a band range corresponding to the first index value combination and receiving and transmitting proximity service data in a band range corresponding to the second index value combination, wherein each of the first index value combination and the second index value combination comprises one or more index values, and each index value in the one or more index values is respectively carried in a band parameter information unit.

In an exemplary implementation, the above-mentioned apparatus further includes: a second configuration module, which is arranged to pre-configure with the second communication node to complete a corresponding relationship between all proximity service band ranges supported by a receiver and/or transmitter dedicated for a proximity service and band index values, wherein in the corresponding relationship each proximity service band range respectively corresponds to a band index value, and the proximity service comprises at least one of the following: a ProSe discovery and a ProSe communication.

In an exemplary implementation, the determination module is arranged to determine the indication information according to one of the following: determining that indication information about having the receiver and/or transmitter dedicated for the proximity service needs to be reported to the second communication node under a situation of configuring with the receiver and/or transmitter dedicated for the proximity service by the first communication node; and determining that the plurality of index value combinations needs to be reported to the second communication node under a situation of acquiring index values corresponding to various bands from the corresponding relationship when the receiver and/or transmitter dedicated for the proximity service configured by the first communication node works at a plurality of bands.

In an exemplary implementation, the reporting module is arranged to report the indication information to the second communication node according to one of the following: the first communication node reporting the indication information to the second communication node after receiving a request message from the second communication node, wherein the request message is used for acquiring the information about the proximity service supporting capability; and the first communication node reporting actively the indication information to the second communication node.

The present disclosure also discloses an apparatus for processing information about a proximity service supporting capability.

The apparatus for processing the information about the proximity service supporting capability according to an implementation of the present disclosure includes the following modules. A receiving module is arranged to receive indication information reported by a first communication node, herein the indication information is used for indicating information about a proximity service supporting capability of the first communication node. An allocation module is arranged to allocate a proximity service resource and/or a cellular network service resource to the first communication node according to the indication information.

In an exemplary implementation, the information about the proximity service supporting capability includes at least one of the following: indication information about supporting a proximity service; indication information about supporting proximity service receiving and/or transmitting; indication information about all bands which correspond to all indicated bands and on which receiving and/or transmitting proximity services is supported; indication information about uplink bands which correspond to all indicated bands and on which receiving and/or transmitting proximity services is supported; indication information about downlink bands which correspond to all indicated bands and on which receiving and/or transmitting proximity services is supported; indication information about all bands which correspond to specially indicated bands and on which receiving and/or transmitting proximity services is supported; indication information about uplink bands which correspond to specially indicated bands and on which receiving and/or transmitting proximity services is supported; indication information about downlink bands which correspond to specially indicated bands and on which receiving and/or transmitting proximity services is supported; indication information about a parameter combination consisting of a band parameter set of bands for cellular communication and a band parameter set of bands for proximity services, in which the cellular communication and the proximity services are supported to be performed simultaneously; band class information of bands supporting proximity services; a band parameter set of bands on which simultaneous reception of cellular communication and proximity services is supported; a band parameter set of bands on which receiving and/or transmitting proximity services is supported; indication information about having a receiver dedicated for supporting a proximity service; indication information about having a transmitter dedicated for supporting a proximity service; indication information about the number of all receiving links; indication information about the number of all transmitting links; indication information about the number of receiving links supporting proximity services; indication information about the number of transmitting links supporting proximity services; indication information about whether gaps are required when proximity services are received on indicated bands; and indication information about whether proximity services are capable of being received simultaneously or in parallel on indicated bands. Herein, the proximity service comprise at least one of the following: a ProSe discovery and a ProSe communication; the uplink band is a uplink frequency configured in a system to which the first communication node is connected or in which the first communication node resides currently; the downlink band is a downlink frequency configured in a system to which the first communication node is connected or in which the first communication node resides currently; and the system comprises at least one of the following: Evolved Universal Terrestrial Radio Access, EUTRA, and Universal Terrestrial Radio Access, UTRA

In an exemplary implementation, the allocation module includes the following units. A first determination unit is arranged to determine that the first communication node has the proximity service supporting capability but does not support receiving and transmitting service data simultaneously in a plurality of band ranges according to the indication information. A first allocation unit is arranged to allocate the proximity service resource and the cellular network service resource to the first communication node through a time-division multiplexing mode; or allocate a ProSe discovery resource and the cellular network service resource to the first communication node only through the time-division multiplexing mode.

In an exemplary implementation, the allocation module includes the following units. A second determination unit is arranged to determine that the first communication node has the proximity service supporting capability and supports simultaneously receiving and transmitting service data in a plurality of band ranges according to the indication information. A second allocation unit is arranged to allocate the proximity service resource and the cellular network service resource to the first communication node through a time-division multiplexing mode; or allocate the proximity service resource and the cellular network service resource to the first communication node through a frequency-division multiplexing mode; or allocate a ProSe discovery resource and the cellular network service resource to the first communication node through the time-division multiplexing mode and allocate a ProSe communication resource and the cellular network service resource to the first communication node through the frequency-division multiplexing mode.

In an exemplary example, the receiving module is arranged to receive the indication information reported by the first communication node according to one of the following: the second communication node receiving the indication information reported by the first communication node after transmitting a request message to the first communication node, wherein the request message is used for acquiring the information about the proximity service supporting capability; and the second communication node receiving the indication information actively reported by the first communication node.

Through the implementations of the present disclosure, the following method is adapted: a first communication node determining indication information to be reported, herein the indication information is used for indicating information about a proximity service supporting capability of the first communication node; and the first communication node reporting the indication information to a second communication node. Thus, the problem that a base station cannot know whether a UE has a ProSe capability in the related technology is solved. Thereby, it is achieved that the first communication node can implement reporting of the ProSe capability with smaller overhead, and the second communication node can reasonably and effectively allocate ProSe service and/or cellular network service resources to the first communication node, so that the interference and influence between ProSe services and cellular network services are minimized.

### Brief Description of Drawings

The drawings described here are used for providing further understanding about the present disclosure and constitutes a part of the present application. The exemplary implementations of the present disclosure and the descriptions thereof are used for explaining the present disclosure instead of improperly limiting the present disclosure. In the drawings:
FIG. 1 illustrates a flowchart of a method for reporting information about a proximity service supporting capability according to an implementation of the present disclosure.
FIG. 2 illustrates a flowchart of a method for processing information about a proximity service supporting capability according to an implementation of the present disclosure.
FIG. 3 illustrates a structural diagram of an apparatus for reporting information about a proximity service supporting capability according to an implementation of the present disclosure.
FIG. 4 illustrates a structural diagram of an apparatus for reporting information about a proximity service supporting capability according to an alternative implementation of the present disclosure.
FIG. 5 illustrates a structural diagram of an apparatus for processing information about a proximity service supporting capability according to an implementation of the present disclosure.
FIG. 6 illustrates a structural diagram of an apparatus for processing information about a proximity service supporting capability according to an alternative implementation of the present disclosure.

### Detailed Description

The present disclosure will be described below in detail with reference to the drawings in combination with the implementations. It shall be illustrated that the implementations in the present application and the features in the implementations may be mutually combined under the situation of no conflict.

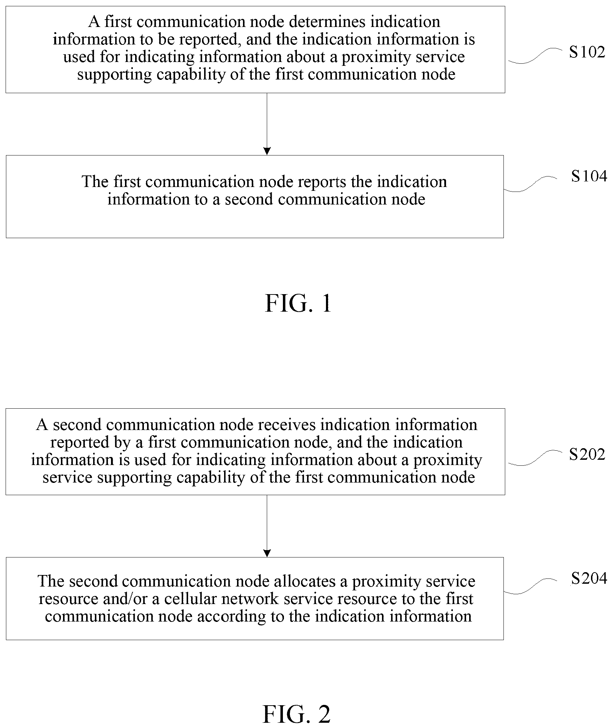

FIG. 1 illustrates a flowchart of a method for reporting information about a proximity service supporting capability according to one implementation of the present disclosure. As illustrated in FIG. 1, the method may include the following processing steps:
In step S102, a first communication node determines indication information to be reported; herein the indication information is used for indicating information about a proximity service supporting capability of the first communication node.

In step S104, the first communication node reports the indication information to a second communication node.

In the related technology, between two modes, i.e., cellular communication and ProSe/Sidelink communication/discovery modes, due to limitation of UE half-duplex capability and in consideration of interference, UE cannot simultaneously receive and transmit ProSe service data on the same frequency, and cannot receive ProSe service data and transmit cellular network data on the same frequency, either. If it is needed to transmit ProSe service and cellular service data on the same frequency, transmission can only be performed through a time-division multiplexing mode, i.e., UE which performs ProSe service communication divide subframes into special subframes for ProSe communication/discovery service transmission and subframes for cellular network service transmission. On one hand, in consideration of a scenario that ProSe services and cellular services are on the same band which includes an uplink band resource and a downlink band resource, if it is needed to realize an effect of receiving ProSe service data on the uplink band of the same band and receiving cellular network data on the downlink band of the same band, the receiving capability of UE is specially required. If UE has such capability, a base station does not necessarily perform time-division processing for receiving ProSe service data when downlink cellular resources are allocated. Otherwise, the time-division multiplexing mode needs to be considered. If the base station does not know whether UE has a capability of simultaneously receiving ProSe service data and cellular service data, the base station can only perform uniform processing. If UE does not have the capability of simultaneously receiving ProSe service data and cellular service data but the base station does not adopt the time-division multiplexing mode to allocate two types of resources to UE, there is a very great interference between the two types of services. Contrarily, if UE has the capability of simultaneously receiving ProSe service data and cellular service data but the base station still adopts the time-division multiplexing mode to allocate two types of resources to UE, the resources are greatly wasted. If UE does not have a ProSe service communication capability, there are not special subframes for ProSe communication/discovery service transmission. On a premise that no conflict is caused to resources allocated to other UE, cellular network unicast service resources can be allocated on any subframe. Since UE which has the ProSe service communication capability but does not have the capability of simultaneously receiving ProSe service data and cellar service data cannot allocate cellular services on a special subframe for ProSe communication/discovery services, other UE may allocate cellular services on such subframe. If the base station does not know whether UE has the ProSe service communication capability, a correct judgment cannot be made when resources are allocated. On the other hand, in consideration of a scenario that ProSe services and cellular services are on different bands, if UE supports simultaneously receiving and transmitting on two bands, when UE starts ProSe communication transmission, ProSe data need to be received and transmitted on one band and cellular network unicast network data can only be received and transmitted on the other band, i.e., for a cellular network unicast network, the carrier aggregation capability of UE is decreased. If the base station does not know that UE needs to receive D2D service data and still allocates resources to UE to receive and transmit cellular network unicast data on two bands, consequently UE simultaneously receives/transmit cellular network unicast data and ProSe data on the same band, a very great interference is caused therebetween and UE cannot correctly receive and transmit data. Besides, since different UE are different in receiver performance, even though UE supports transmission on two bands, due to an influence between two receiving units, simultaneous receiving on any two bands is not always feasible. If two unsuitable bands are allocated to UE to simultaneously receive two types of different service data, the interference therebetween may be very great and even UE cannot work. Therefore, in order to reasonably and effectively allocate resources to UE, the base station needs to comprehensively know whether UE has a ProSe supporting capability. By adopting the method illustrated in FIG. 1, by reporting the proximity service supporting capability through the first communication node, the second communication node can know that the first communication node has the ProSe supporting capability. Thereby, the problem that a base station cannot know whether UE has the ProSe supporting capability in the related art is solved, the first communication node can realize the reporting of the ProSe supporting capability at smaller overhead, the second communication node can reasonably and effectively allocate ProSe service and/or cellular network service resources to the first communication node after capability information is acquired, and thus the interference and influence between ProSe services and cellular network services are minimized.

In an alternative implementation process, the above-mentioned first communication node may be User Equipment UE, and the above-mentioned second communication node may be a base station.

In an exemplary implementation, the information about the proximity service supporting capability may include but not limited to at least one of the following information:
(1) indication information about supporting a proximity service;
(2) indication information about supporting proximity service receiving and/or transmitting;
(3) indication information about all bands which correspond to all indicated bands and on which receiving and/or transmitting proximity services is supported;
(4) indication information about uplink bands which correspond to all indicated bands and on which receiving and/or transmitting proximity services is supported;
(5) indication information about downlink bands which correspond to all indicated bands and on which receiving and/or transmitting proximity services is supported;
(6) indication information about all bands which correspond to specially indicated bands and on which receiving and/or transmitting proximity services is supported;
(7) indication information about uplink bands which correspond to specially indicated bands and on which receiving and/or transmitting proximity services is supported;
(8) indication information about downlink bands which correspond to specially indicated bands and on which receiving and/or transmitting proximity services is supported;
(9) indication information about a parameter combination consisting of a band parameter set of bands for cellular communication and a band parameter set of bands for proximity services, in which the cellular communication and the proximity services are supported to be performed simultaneously;
(10) band class information of bands supporting proximity services;
(11) a band parameter set of bands on which simultaneous reception of cellular communication and proximity services is supported;
(12) a band parameter set of bands on which receiving and/or transmitting proximity services is supported;
(13) indication information about having a receiver dedicated for supporting a proximity service;
(14) indication information about having a transmitter dedicated for supporting a proximity service;
(15) indication information about the number of all receiving links;
(16) indication information about the number of all transmitting links;
(17) indication information about the number of receiving links supporting proximity services;
(18) indication information about the number of transmitting links supporting proximity services;
(19) indication information about whether gaps are required when proximity services are received on indicated bands; and
(20) indication information about whether proximity services are capable of being received simultaneously or in parallel on indicated bands.

Herein, the above-mentioned proximity service comprise at least one of the following: a ProSe discovery and a ProSe communication; the uplink band is a uplink frequency configured in a system to which the first communication node is connected or in which the first communication node resides currently; the downlink band is a downlink frequency configured in a system to which the first communication node is connected or in which the first communication node resides currently; and the system comprises at least one of the following: EUTRA and UTRA.

In an exemplary implementation, before step S102 in which the first communication node determines the indication information, the method may further include the following operation:
In step S1, the first communication node pre-configures together with the second communication node to complete a corresponding relationship between all band ranges supported by the first communication node and band index value combinations, herein in the corresponding relationship each band range respectively corresponds to a band index value.

In an exemplary implementation, step S102 in which the first communication node determines the indication information may include one of the following steps:
In step S2, under a situation that the first communication node supports simultaneously receiving and transmitting EUTRA network data in a band range corresponding to a first index value combination and receiving and transmitting proximity service data in a band range corresponding to a second index value combination, the first communication node determines that the first index value combination and the second index value combination need to be reported to the second communication node. Herein each of the first index value combination and the second index value combination includes one or more index values, and each index value in the one or more index values is respectively carried in a band parameter information unit.

In step S3, under a situation that the first communication node does not support simultaneously receiving and transmitting EUTRA network data in a band range corresponding to a first index value combination and receiving and transmitting proximity service data in a band range corresponding to a second index value combination, the first communication node determines that the first index value combination or the second index value combination needs to be reported to the second communication node. Herein each of the first index value combination and the second index value combination includes one or more index values, and each index value in the one or more index values is respectively carried in a band parameter information unit.

In an exemplary implementation, before step S102 in which the first communication node determines the indication information, the method may further include the following operation:
In step S4, the first communication node pre-configures together with the second communication node to complete a corresponding relationship between all proximity service band ranges supported by a receiver and/or transmitter dedicated for proximity services and band index values. Herein in the corresponding relationship each proximity service band range respectively corresponds to a band index value, and the proximity services include at least one of the following: a ProSe discovery and a ProSe communication.

In an exemplary implementation, step S102 in which the first communication node determines the indication information may include at least one of the following steps.

In step S5, under a situation that the first communication node configures with the receiver and/or transmitter dedicated for the proximity service, the first communication node determines that indication information about having the receiver and/or transmitter dedicated for the proximity service needs to be reported to the second communication node.

In step S6, under a situation that the first communication node acquires index values corresponding to various bands from the corresponding relationship when the receiver and/or transmitter dedicated for the proximity service configured by the first communication node works at a plurality of bands, the first communication node determines that a plurality of index value combinations needs to be reported to the second communication node.

In an exemplary implementation, step S 104 in which the first communication node reports the indication information to the second communication node may include at least one of the following modes:
In mode 1, the first communication node reports the indication information to the second communication node after receiving a request message (e.g., UECapabilityEnquiry) from the second communication node, herein the request message is used for acquiring the information about the proximity service supporting capability.

In mode 2, the first communication node actively reports the indication information to the second communication node.

FIG. 2 illustrates a flowchart of a method for processing information about a proximity service supporting capability according to one implementation of the present disclosure. As illustrated in FIG. 2, the method may include the following processing steps.

In step S202, a second communication node receives indication information reported by a first communication node, herein the indication information is used for indicating information about a proximity service supporting capability of the first communication node.

In step S204, the second communication node allocates a proximity service resource and/or a cellular network service resource to the first communication node according to the indication information.

In an exemplary implementation, the above-mentioned information about the proximity service supporting capability may include but not limited to at least one of the following:
(1) indication information about supporting a proximity service;
(2) indication information about supporting proximity service receiving and/or transmitting;
(3) indication information about all bands which correspond to all indicated bands and on which receiving and/or transmitting proximity services is supported;
(4) indication information about uplink bands which correspond to all indicated bands and on which receiving and/or transmitting proximity services is supported;
(5) indication information about downlink bands which correspond to all indicated bands and on which receiving and/or transmitting proximity services is supported;
(6) indication information about all bands which correspond to specially indicated bands and on which receiving and/or transmitting proximity services is supported;
(7) indication information about uplink bands which correspond to specially indicated bands and on which receiving and/or transmitting proximity services is supported;
(8) indication information about downlink bands which correspond to specially indicated bands and on which receiving and/or transmitting proximity services is supported;
(9) indication information about a parameter combination consisting of a band parameter set of bands for cellular communication and a band parameter set of bands for proximity services, in which the cellular communication and the proximity services are supported to be performed simultaneously;
(10) band class information of bands supporting proximity services;
(11) a band parameter set of bands on which simultaneous reception of cellular communication and proximity services is supported;
(12) a band parameter set of bands on which receiving and/or transmitting proximity services is supported;
(13) indication information about having a receiver dedicated for supporting a proximity service;
(14) indication information about having a transmitter dedicated for supporting a proximity service;
(15) indication information about the number of all receiving links;
(16) indication information about the number of all transmitting links;
(17) indication information about the number of receiving links supporting proximity services;
(18) indication information about the number of transmitting links supporting proximity services;
(19) indication information about whether gaps are required when proximity services are received on indicated bands; and
(20) indication information about whether proximity services are capable of being received simultaneously or in parallel on indicated bands.

Herein, the above-mentioned proximity service comprise at least one of the following: a ProSe discovery and a ProSe communication; the uplink band is a uplink frequency configured in a system to which the first communication node is connected or in which the first communication node resides currently; the downlink band is a downlink frequency configured in a system to which the first communication node is connected or in which the first communication node resides currently; and the system comprises at least one of the following: EUTRA and UTRA.

In an exemplary implementation, step S204 in which the second communication node allocates the proximity service resource and/or the cellular network service resource to the first communication node according to the indication information may include the following operations.

In step S7, the second communication node determines that the first communication node has the proximity service supporting capability but does not support receiving and transmitting service data simultaneously in a plurality of band ranges according to the indication information.

In step S8, the second communication node allocates the proximity service resource and the cellular network service resource to the first communication node through a time-division multiplexing mode. Or the second communication node allocates a ProSe discovery resource and the cellular network service resource to the first communication node only through the time-division multiplexing mode.

In an alternative implementation mode, frequency-division multiplexing represents that different band resources are allocated for two types of services. Time-division multiplexing represents that different time resources are allocated for two types of services.

In an exemplary implementation, step S204 in which the second communication node allocates the proximity service resource and/or the cellular network service resource to the first communication node according to the indication information may include the following steps.

In step S9, the second communication node determines that the first communication node has the proximity service supporting capability and supports simultaneously receiving and transmitting service data in a plurality of band ranges according to the indication information.

In step S10, the second communication node allocates the proximity service resource and the cellular network service resource to the first communication node through a time-division multiplexing mode. Or the second communication node allocates the proximity service resource and the cellular network service resource to the first communication node through a frequency-division multiplexing mode. Or the second communication node allocates a ProSe discovery resource and the cellular network service resource to the first communication node through the time-division multiplexing mode and allocates a ProSe communication resource and the cellular network service resource to the first communication node through the frequency-division multiplexing mode.

In an exemplary implementation, step S202 in which the second communication node receives the indication information reported by the first communication node may include one of the following modes.

In mode 1, after the second communication node transmits a request message to the first communication node, the second communication node receives the indication information reported by the first communication node, herein the request message is used for acquiring the information about the proximity service supporting capability.

In mode 2, the second communication node receives the indication information actively reported by the first communication node.

In current communication protocols, band index numbers are designated for all uplink and downlink bands possibly supported by UE, and each band index number, e.g., band 1, corresponds to an uplink band resource, e.g., 1920MHz-1980MHz, and a downlink band resource, e.g., 2110MHz-2170MHz. If the UE reports the band index number to the base station, it represents that a transmitter of the UE supports transmitting data on the uplink band resource corresponding to the band index number and a receiver of the UE supports receiving data on the downlink band resource corresponding to the band index number. For an FDD system, the uplink band and the downlink band are different. In other words, bands on which UE supports transmitting and supports receiving are different, too.

However, for UE supporting ProSe, it needs to notify a base station about bands on which it can not only support receiving data but also support transmitting data. However, the existing indication method obviously cannot implement such operation.

It shall be illustrated that ProSe services mentioned in the implementation of the present disclosure may include but not limited to at least one of the following:
(1) ProSe discovery service; and
(2) ProSe communication service.

The above-mentioned alternative implementation processes will be further described below in combination with the following alternative implementations.

### Alternative implementation one

In this alternative implementation, Table 1 is a table of a corresponding relationship between uplink and downlink band ranges and band indexes preconfigured in a system according to the alternative implementation of the present disclosure, as shown in Table 1:

**Table 1**

| E-UTRA operating band | UL operating band BS receive UE transmit | DL operating band BS transmit UE receive | Duplex mode |
|---|---|---|---|
| | FUL_LOW - FUL_high | FDL low - FDL_high | |
| 1 | 1920MHz - 1980MHz | 2110MHz-2170MHz | FDD |
| ... | | | |

The method may include the following processing steps:
In step 1, a base station transmits indication information to UE, herein the indication information, e.g., UECapabilityEnquiry, is used for requesting to acquire a UE capability.
In step 2, the UE reports the indication information about the UE capability to the base station.

Herein, the indication information about the UE capability may include but not limited to at least one of the following:

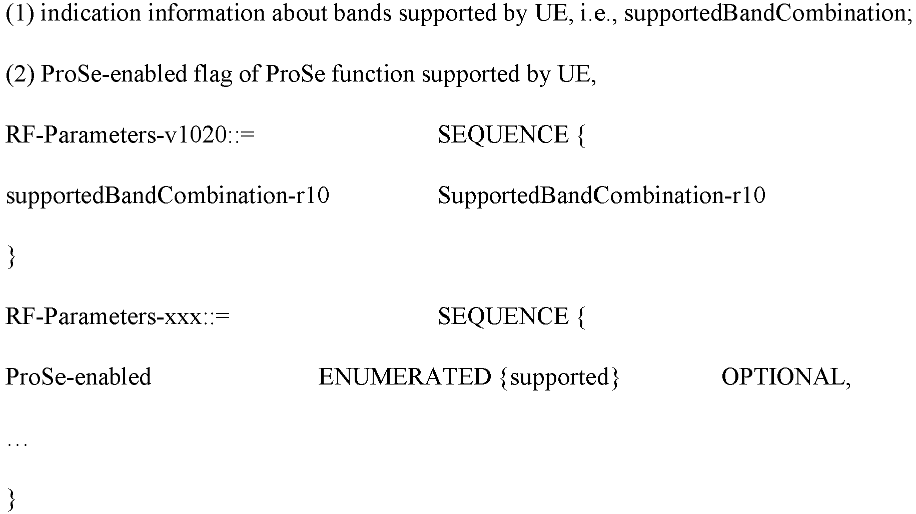

The above-mentioned ProSe-enabled may have other names, which, however, need to indicate that the UE has a ProSe discovery and/or communication capability on supported bands.

The above-mentioned SupportedBandCombination information may include but not limited to a sequence consisting of a plurality of combinations, herein each combination consists of one or more band parameters and the band parameters include band index numbers.

In step 3, after the base station receives the indication information about the UE capability and subsequently receives a D2D discovery or communication request allocation indication of the UE, the base station allocates cellular network service and/or ProSe service resources to the UE.

In this alternative implementation, after the base station receives the SupportedBandCombination information in the indication information about the UE capability, the base station can know a band range supported by the UE according to the preconfigured table of the corresponding relationship between uplink and downlink band ranges and band indexes. If each of partial combinations in the sequence has a plurality of band parameters, it indicates that the UE supports simultaneously receiving and transmitting data on uplink and downlink bands corresponding to the plurality of bands. And if each of all combinations in the sequence only has one band parameter, it indicates that the UE does not support simultaneously receiving and transmitting data on a plurality of bands.

After the base station receives the ProSe-enabled indication information, if the base station knows that the UE has the ProSe discovery and/or communication supporting capability, there are service data which need to be transmitted and the UE does not support simultaneously receiving/transmitting data on a plurality of bands, the base station may adopt one of the following operations.

In operation 1, a ProSe discovery and/or communication service resource and a cellular network service resource are allocated to the UE through a time-division multiplexing mode.

In operation 2, a ProSe discovery service resource and a cellular network service resource are allocated to the UE through a time-division multiplexing mode. However, a ProSe communication service resource and a cellular network service resource cannot be allocated to the UE through a time-division multiplexing mode.

Herein, the ProSe discovery service and/or communication service resource may include resources for UE to transmit data and resources for UE to monitor data.

### Alternative implementation two

In this alternative implementation, if UE supports simultaneously receiving and transmitting data on N bands, where N is a positive integer and N≥2, this alternative implementation has the following difference from alternative implementation 1:
After the base station receives the ProSe-enabled indication information, if the base station knows that the UE has the ProSe discovery and/or communication supporting capability and there are service data which need to be transmitted, the base station may adopt one of the following operations.

In operation 1, a ProSe discovery and/or communication service resource and a cellular network service resource are allocated to the UE through a time-division multiplexing mode.

In operation 2, a ProSe discovery and/or communication service resource and a cellular network service resource are allocated to the UE through a frequency-division multiplexing mode.

The base station may at most allocate N-M bands to the UE to receive/transmit cellular network service data and allocate M bands to the UE to receive ProSe discovery and/or communication service data, where M=1:N, i.e., M is a natural number greater than or equal to 1 and smaller than or equal to N, herein a preferred value of M is 1. In an alternative implementation process, when M=N, it indicates that the UE only receives cellular network control information and ProSe discovery and/or communication service data and does not receive cellular network service data.

In operation 3, a ProSe discovery service resource and a cellular network service resource are allocated to the UE through a time-division multiplexing mode, and a ProSe communication service resource and a cellular network service resource are allocated to the UE through a frequency-division multiplexing mode.

The base station may at most simultaneously allocate N-M bands to the UE to receive cellular network service data and allocate M bands to the UE to receive ProSe communication service data, where M=1:N, herein a preferred value of M is 1. In an alternative implementation process, when M=N, it indicates that the UE only receives cellular network control information and ProSe communication service data and does not receive cellular network service data.

In this alternative implementation, the base station preferentially selects to execute operation 3. For example, if N=2, it indicates that the UE supports simultaneous receiving and transmitting on two bands. If there are no ProSe service data which need to be transmitted, the carrier aggregation capability of the UE is 2, i.e., cellular network data may be simultaneously received and transmitted on two bands. However, when the UE starts transmitting ProSe communication service data, the UE can only receive and transmit cellular network data on one band, i.e., for a cellular network, the carrier aggregation capability of the UE is decreased to 1.

### Alternative implementation three

This alternative implementation has the following difference from alternative implementation 1 and alternative implementation 2: the UE separately indicates a ProSe discovery capability and a ProSe communication capability.

A terminal reports UE capability information to a base station, herein the UE capability information may include but not limited to at least one of the following:

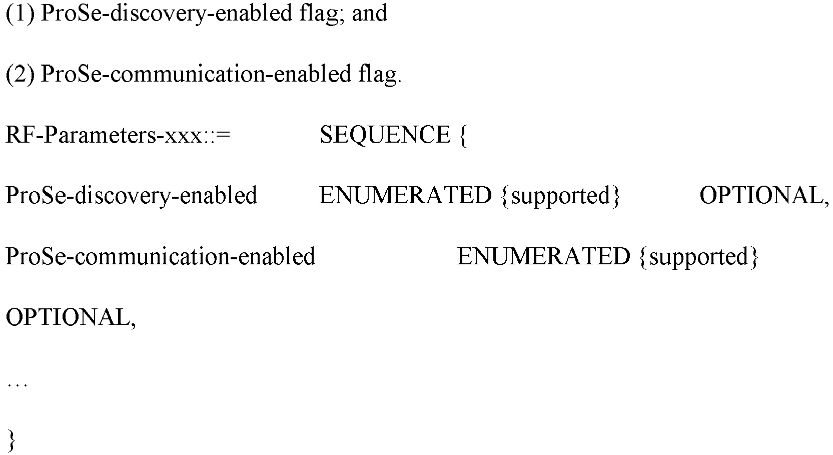

ProSe-discovery-enabled identification and ProSe-communication-enabled identification may adopt other names, which, however, need to respectively indicate that the UE has ProSe discovery and ProSe communication capabilities on bands supported thereby.

After the base station receives the ProSe-discovery-enabled indication information, if the base station knows that the UE has the ProSe discovery supporting capability, there are service data which need to be transmitted and the UE does not support simultaneously receiving/transmitting data on a plurality of bands, the base station may adopt the following operation: a ProSe discovery resource and a cellular network service resource are allocated to the UE through a time-division multiplexing mode.

After the base station receives the ProSe-communication-enabled indication information, if the base station knows that the UE has the ProSe communication supporting capability, there are service data which need to be transmitted and the UE does not support simultaneously receiving/transmitting data on a plurality of bands, the base station may adopt the following operation: a ProSe communication resource and a cellular network service resource are allocated to the UE through a time-division multiplexing mode.

Herein, the ProSe discovery service and/or communication service resource may include but not limited to resources for UE to transmit data and resources for UE to monitor data.

### Alternative implementation four

In this alternative implementation, UE has a capability of supporting simultaneously receiving and transmitting data on N bands. In addition to that specific parameter values of capability information reported by the UE are different, this alternative implementation further has the following difference from preferred implementation 3.

After the base station receives the ProSe-discovery-enabled identification and/or the ProSe-communication-enabled identification, in addition to all operations mentioned in alternative implementation 3, the base station may also adopt at least one of the following operations.

In operation 1, a ProSe discovery and/or communication service resource and a cellular network service resource are allocated to the UE through a frequency-division multiplexing mode.

The base station may at most allocate N-M bands to the UE to receive cellular network service data and allocate M bands to the UE to receive ProSe discovery and/or communication service data, where M=1:N, herein a preferred value of M is 1. When M=N, it indicates that the UE only receives cellular network control information and ProSe discovery and/or communication service data and does not receive cellular network service data.

In operation 2, a ProSe discovery service resource and a cellular network service resource are allocated to the UE through a time-division multiplexing mode, and a ProSe communication service resource and a cellular network service resource are allocated to the UE through a frequency-division multiplexing mode.

The base station may at most simultaneously allocate N-M bands to the UE to receive cellular network service data and allocate M bands to the UE to receive ProSe communication service data, where M=1:N, herein a preferred value of M is 1. When M=N, it indicates that the UE only receives cellular network control information and ProSe communication service data and does not receive cellular network service data.

### Alternative implementation five

This alternative implementation has the following difference from alternative implementation 1:
A terminal reports UE capability information to a base station, herein the UE capability information may include but not limited to at least one of the following:
ProSe-discovery-enabled identification and ProSe-communication-enabled identification.

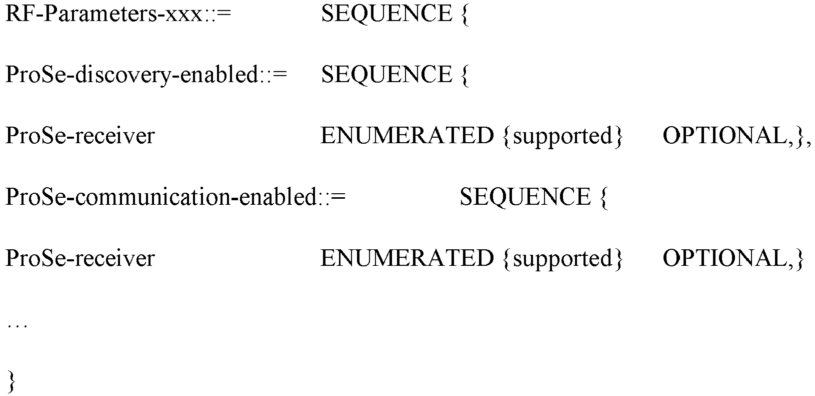

ProSe-discovery-enabled identification and ProSe-communication-enabled identification may adopt other names, which, however, need to respectively indicate that the UE has ProSe discovery and ProSe communication capabilities. ProSe-receiver identification may also adopt other names to indicate whether the UE supports receiving ProSe service data by adopting a special receiver.

If the UE supports receiving ProSe service data by adopting a separate receiver, the UE may simultaneously receive cellular network service and ProSe service data, and the base station does not need to consider about time-division processing for ProSe services when downlink cellular network resources are allocated to the UE.

Herein, the ProSe discovery service and/or communication service resource may include but not limited to resources for UE to transmit data and resources for UE to monitor data.

### Alternative implementation six

In this alternative implementation, if UE supports receiving ProSe service data by adopting a separate receiver, this alternative implementation has the following difference from alternative implementation 5:

In addition to the table of the corresponding relationship mentioned in alternative implementation 1, a table of a corresponding relationship between ProSe service working band ranges and band indexes further needs to be preconfigured to the base station and the UE, as shown in Table 2:

**Table 2**

| ProSe operating band | Operating band |
|---|---|
| | UE receive |
| | UE transmit |
| | Flow - Fhigh |
| 1 | F1 MHz - F2 MHz |
| ... | |

In addition, the UE further needs to report band indexes corresponding to working band ranges supporting ProSe services. After the base station receives the index information, the base station may allocate a ProSe service resource to the UE on a band corresponding to the band index.

### Alternative implementation seven

This alternative implementation has the following difference from alternative implementation 1:
ProSe-enabled identification mentioned in alternative implementation 1 is refined and may include but not limited to the following cases. ProSe-UL-enabled and ProSe-DL-enabled, herein ProSe-UL-enabled indicates that UE supports receiving and transmitting ProSe service data on uplink bands corresponding to reported and supported band indexes; and ProSe-DL-enabled indicates that UE supports receiving and transmitting ProSe service data on downlink bands corresponding to reported and supported band indexes. If the UE simultaneously reports ProSe-UL-enabled identification and ProSe-DL-enabled identification, it indicates that the UE may support receiving and transmitting ProSe service data on uplink and downlink bands corresponding to reported band indexes.

After the base station receives the ProSe-enabled identification, a processing mode is the same as that in alternative implementation 1, i.e., a ProSe service resource is allocated to the UE on bands supported by the UE.

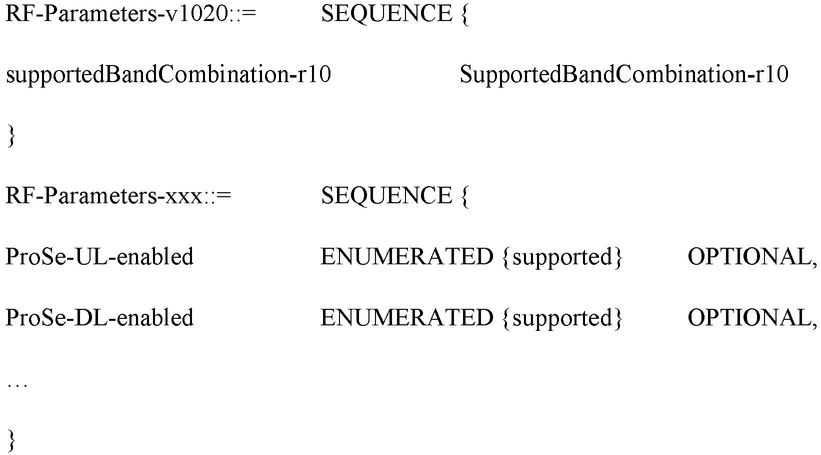

### Alternative implementation eight

This alternative implementation continuously performs refining on the basis of alternative implementation 1 and has the following difference:
Bands, corresponding to band indexes, on which UE supports ProSe services, are specifically indicated. A base station and a terminal pre-configure a table of a corresponding relationship between uplink and downlink band ranges and band indexes, as shown in Table 1. The terminal reports UE capability information to the base station, herein the UE capability information may include but not limited to: indication information about band indexes corresponding to bands on which UE supports working on a cellular network.

If the UE supports receiving and transmitting cellular network data on a plurality of bands but can only support receiving and transmitting ProSe service data on uplink bands and/or downlink bands corresponding to partial band indexes, it needs to respectively indicate bands, on corresponding uplink bands and/or downlink bands of which receiving and transmitting are supported.

UE reports indication information about band parameters, and the indication information may include: band index numbers and indication information UL-ProSe and/or DL-ProSe about whether uplink frequencies and/or downlink frequencies corresponding to band index numbers support receiving and transmitting ProSe service data.

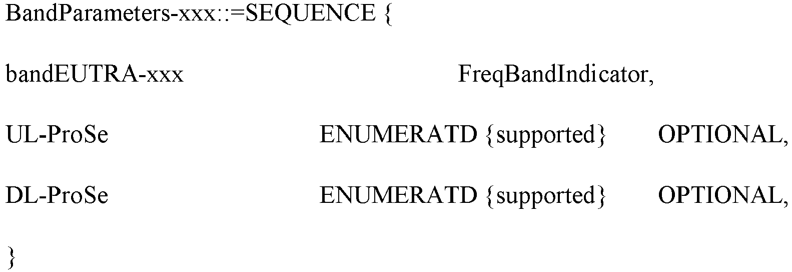

UL-ProSe represents that ProSe discovery and/or communication service data are capable of being received and transmitted on an uplink band corresponding to a band index.

DL-ProSe represents that ProSe discovery and/or communication service data are capable of being received and transmitted on a downlink band corresponding to a band index.

After the base station receives the above-mentioned indication information, the base station can know whether the UE has a capability of supporting ProSe discovery and/or communication, and bands on which ProSe discovery and/or communication are supported. A resource allocation mode thereof is similar to that in alternative implementation 1 and thus is not repetitively described here.

### Alternative implementation nine

This alternative implementation has the following difference from alternative implementation 8:
UE reports indication information about band parameters, and the indication information may include: a band index number and a class of a band. The class of the band may be used for judging whether the band supports ProSe services. For example, a class above h indicates that the band supports ProSe services. Otherwise, it indicates that the band does not support ProSe services.

### Preferred implementation ten

In step 1, a base station transmits indication information to UE, herein the indication information, e.g., UECapabilityEnquiry, is used for requesting to acquire a UE capability.

In step 2, the UE reports indication information about the UE capability to the base station.

Herein, the indication information about the UE capability may include but not limited to:
(1) a band parameter information combination corresponding to bands on which UE supports cellular communication and a band parameter information combination corresponding to bands on which UE supports proximity services, e.g., BandCombination and ProSeBandCombination, which do not exclude other names.
(2) one or more band parameter combinations corresponding to bands on which UE supports simultaneously receiving cellular service data and proximity service data, herein band parameters include band indexes, and UE receives cellular service data on downlink bands corresponding to FDD band indexes and receives proximity service data on downlink bands corresponding to FDD band indexes. Herein, each band parameter combination may consist of one or more band parameters. If a band parameter combination includes a plurality of band parameters, it indicates that UE can support simultaneously receiving cellular service data and proximity service data on a plurality of bands.

In step 3, after the base station receives the indication information about the UE capability and subsequently receives a D2D discovery or communication request allocation indication of the UE, the base station allocates a cellular network service and/or ProSe service resource to the UE.

The base station may determine bands on which the UE can receive cellular communication data and bands on which the UE can receive proximity service data, so as to allocate suitable service resources to the UE.

### Alternative implementation eleven

This alternative implementation has the following difference from alternative implementation 8: UL-ProSe is further divided into UL-ProSe-discovery and UL-ProSe-communication, and DL-ProSe is further divided into DL-ProSe-discovery and DL-ProSe-communication.

UL-ProSe-discovery represents that ProSe discovery service data are capable of being received and transmitted on an uplink band corresponding to a band index.

DL-ProSe-discovery represents that ProSe discovery service data are capable of being received and transmitted on a downlink band corresponding to a band index.

UL-ProSe-communication represents that ProSe communication service data are capable of being received and transmitted on an uplink band corresponding to a band index.

DL-ProSe-communication represents that ProSe communication service data are capable of being received and transmitted on a downlink band corresponding to a band index.

After the base station knows the information about the UE capability, a processing method thereof is similar to that in alternative implementation 1 and thus is not repetitively described here.

### Alternative implementation twelve

This alternative implementation has the following difference from alternative implementation 1:
A base station and a terminal also need to pre-configure a table of a corresponding relationship between uplink and downlink band ranges for cellular communication and band indexes, as shown in Table 1. Simultaneously, the base station and the terminal further need to pre-configure a table of a corresponding relationship between bands for ProSe discovery and/or communication services and band indexes, as illustrated in Table 3:

**Table 3**

| ProSe service operating band | ProSe operating band |
|---|---|
| | UE transmit |
| | UE receive |
| | Flow - Fhigh |
| T | F11 MHz - F12 MHz |
| T+1 | F13 MHz - F14 MHz |
| ... | |

It needs to be stated that index numbers in Table 3 are not repeated with index numbers in Table 1.

UE reports band index numbers corresponding to bands which support ProSe services and band index numbers corresponding to bands which support cellular services. If the UE supports simultaneously receiving and transmitting cellular service data and ProSe discovery and/or communication service data, band index numbers for different services are reported in a combined manner. For example, if the UE simultaneously supports cellular communication on band 1 and ProSe discovery and/or communication on band 50, the UE reports a combination {1, 50} through bandParameterList indication information. The UE needs to report all possible combinations in bandParameterList.

The base station can search in the table according to band index numbers to know bands on which the UE supports simultaneously transmitting cellular communication service data and ProSe discovery and/or communication service data.

### Alternative implementation thirteen

This alternative implementation has the following difference from alternative implementation 12:
Since index numbers in Table 3 are not repeated with index numbers in Table 1, the same indication information cannot be shared to indicate bands in Table 1 and Table 3, and different indication information needs to be respectively used to indicate indexes thereof.

SupportedBandCombination-r10::=SEQUENCE (SIZE (1..maxBandComb-r10)) OF BandCombinationParameters-r10

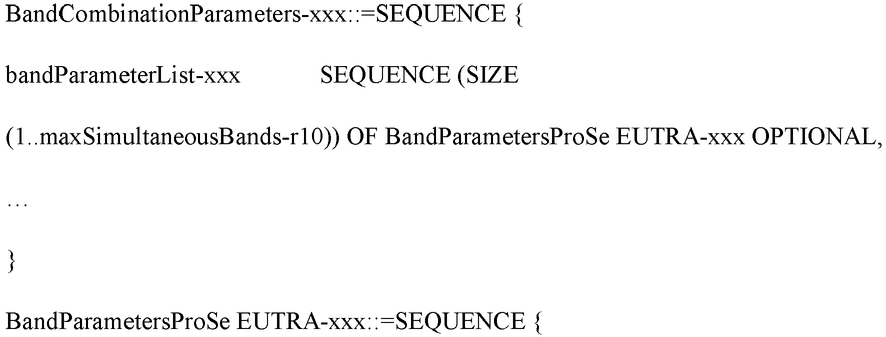

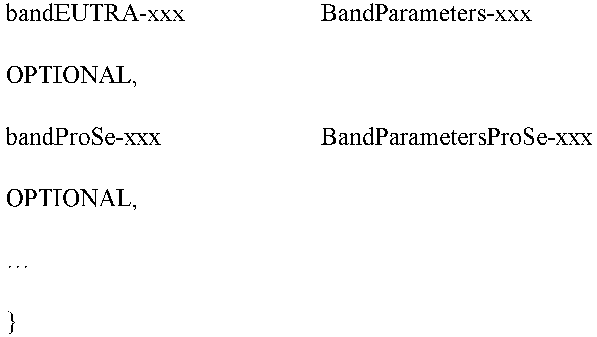

Herein, bandParameterList indication information indicates a combination of band indexes corresponding to a plurality of bands on which UE can simultaneously work, and this combination may include one or more bandEUTRA and/or bandProSe. BandEUTRA indication information indicates band index numbers corresponding to bands on which UE support cellular services. And bandProSe indication information indicates band index numbers corresponding to bands on which UE supports ProSe services.

### Alternative implementation fourteen

In this alternative implementation, a special receiver/transmitter for ProSe services may be designed for certain UE. UE needs to report indication information to a base station to notify the base station about whether the UE has a special receiver/transmitter for ProSe services.

Therefore, this alternative implementation further has the following difference from alternative implementation 1:

Capability indication information reported by the UE may include:

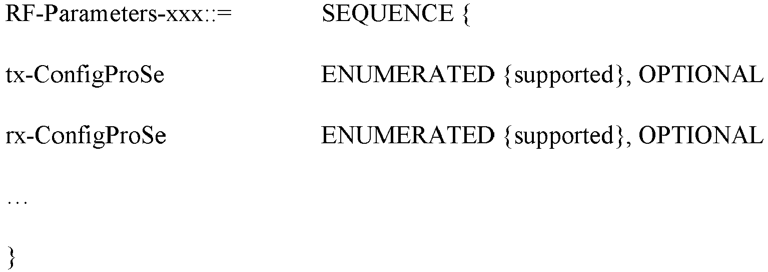

Herein, tx-ConfigProSe represents that the UE has a special transmitter for ProSe services; and rx-ConfigProSe represents that the UE has a special receiver for ProSe services.

If the base station knows that the UE supports receiving ProSe service data by adopting a special receiver after the base station receives the rx-ConfigProSe indication information, it is not necessary to share a receiver/transmitter with a cellular network. In other words, the base station may independently allocate resources for the two types of services.

### Alternative implementation fifteen

This alternative implementation has the following difference from specific implementation 14: in consideration of that bands on which the special receiver/transmitter for ProSe services works are different from bands on which the special receiver/transmitter for cellular network services works, band ranges supported by the special receiver/transmitter for ProSe services needs to be additionally indicated.

A base station side and a UE side both need to pre-configure a table of a corresponding relationship between special band ranges for ProSe services and band indexes.

Capability indication information reported by UE may include:

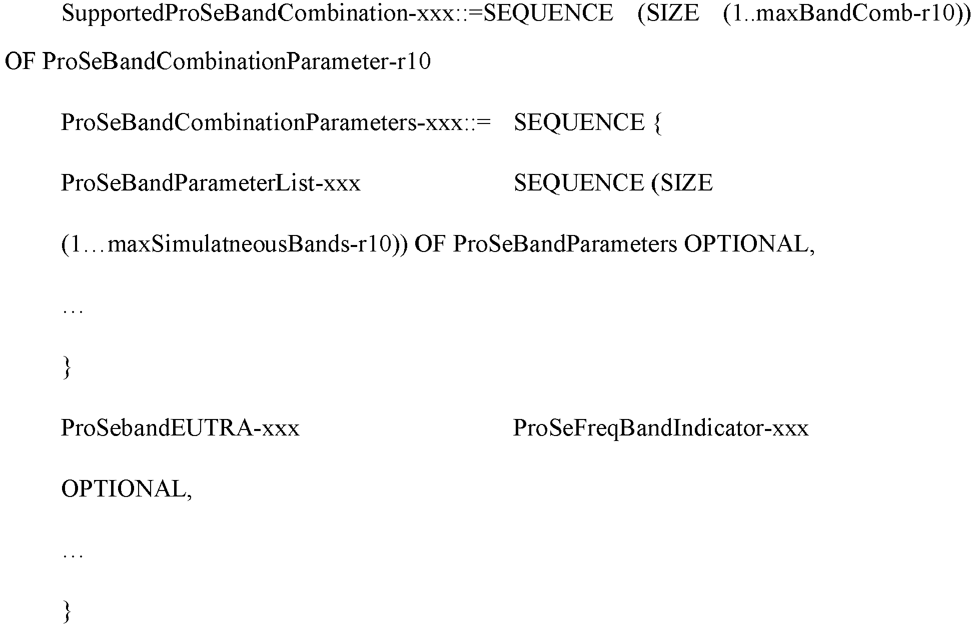

All above-mentioned indication information may adopt other names and meanings represented thereby are as follows.

Herein, SupportedProSeBandCombination may include but not limited to a sequence consisting of a plurality of combinations, herein each combination consists of band index numbers corresponding to one or more ProSe working bands and represents that UE can simultaneously receive and transmit ProSe service data on bands indicated by this combination.

After the base station receives the above-mentioned SupportedProSeBandCombination, the base station can know ranges of bands on which the UE supports simultaneously receiving and transmitting ProSe service data according to the table of the preconfigured corresponding relationship between uplink and downlink band ranges and band indexes. If each of partial combinations in the sequence has a plurality of band index numbers, it indicates that the UE supports simultaneously receiving and transmitting ProSe service data on bands corresponding to a plurality of bands. And if each of all combinations in the sequence has one band number, it indicates that the UE does not support receiving and transmitting ProSe service data on a plurality of bands simultaneously. After the base station acquire the above-mentioned information, the base station can reasonably allocate ProSe service data transmitting resources to the UE.

Similarly, since ProSe service may include but not limited to: ProSe discovery and ProSe communication, therefore, all above-mentioned ProSe related indications may be used for respectively indicating ProSe discovery and ProSe communication.

### Alternative implementation sixteen

In step 1, a base station transmits indication information to UE, herein the indication information, e.g., UECapabilityEnquiry, is used for requesting to acquire a UE capability.

In step 2, the UE reports, to the base station, band parameters of all FDD bands which can support receiving and band combination parameter information of bands which can support simultaneous or parallel receiving, herein the band combination information includes parameter information of each band in a combination, and each band parameter includes at least one of the following:
indication information about whether ProSe service data receiving is supported;
indication information about whether gaps are needed for receiving ProSe service data on a band;
   for example: 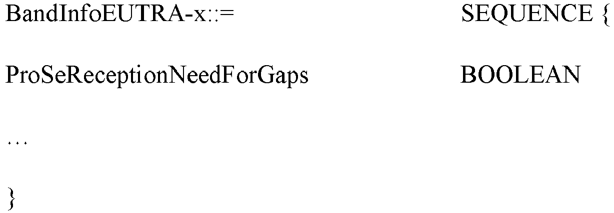
indication information about whether receiving ProSe service data on a band simultaneously or in parallel is supported;
   for example:

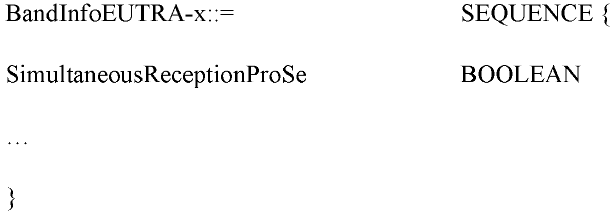

In step 3, after the base station receives the indication information about the UE capability, the base station may make the following judgment.

If the UE indicates, in parameters of a band, e.g., band 1, of a certain band combination, e.g., band 1 and band 2, that gaps are needed for receiving ProSe service data on the same band, or indicates that data cannot be received simultaneously or in parallel, it indicates that the UE can receive data simultaneously or in parallel on band 1 and band 2, can receive proximity service data on band 1, but cannot receive proximity service data and cellular service data simultaneously or in parallel on band 1.

If the UE indicates, in parameters of a band, e.g., band 3, of a certain band combination, e.g., band 3 and band 4, that gaps are not needed for receiving ProSe service data on the same band, or indicates that data can be received simultaneously or in parallel, it indicates that the UE can receive data simultaneously or in parallel on band 3 and band 4, and can receive proximity service data and cellular service data simultaneously or in parallel on band 3, e.g., receive proximity service data on an uplink band corresponding to band 3 and receive cellular service data on a downlink band corresponding to band 3.

If the UE indicates, in parameters of a certain band, e.g., band 5, that gaps are not needed for receiving ProSe service data on the same band, or indicates that data can be received simultaneously or in parallel, it indicates that the UE can receive proximity service data and cellular service data simultaneously or in parallel on band 5, e.g., receive proximity service data on an uplink band corresponding to band 5 and receive cellular service data on a downlink band corresponding to band 5.

If the UE indicates, in parameters of a certain band, e.g., band 6, that gaps are needed for receiving ProSe service data on the same band, or indicates that data cannot be received simultaneously or in parallel, it indicates that the UE cannot receive proximity service data and cellular service data simultaneously or in parallel on band 6.

According to the above-mentioned information, the base station may determine bands on which the UE can receive cellular communication data simultaneously or in parallel, bands on which the UE can receive proximity service data simultaneously or in parallel, and bands on which the UE can receive cellular communication and proximity service data simultaneously or in parallel. After the base station subsequently receive a D2D discovery or communication request allocation indication of the UE, the base station may allocate suitable service resources to the UE.

### Alternative implementation seventeen

In step 1, a base station transmits indication information to UE, herein the indication information, e.g., UECapabilityEnquiry, is used for requesting to acquire a UE capability.

In step 2, the UE reports, to the base station, band parameters of all FDD bands which can support receiving and band combination parameter information of bands which can support simultaneous or parallel receiving, herein each band parameter and/or band set includes at least one of the following:
1) indication information about whether ProSe service data receiving is supported;
2) indication information about whether gaps are needed for receiving ProSe service data on each band in a proximity service band list ProSeBandList;
   for example: 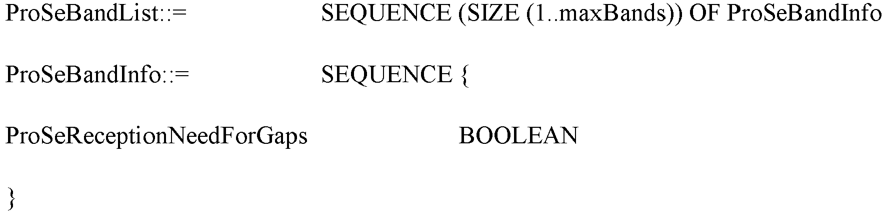
3) indication information about whether ProSe service data on each band can be received simultaneously and in parallel in a proximity service band list ProSeBandList;
   for example: 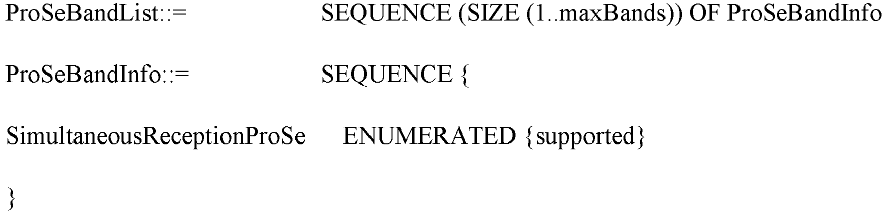
4) indication information about whether gaps are needed for receiving ProSe service data on each band in a proximity service inter-frequency band list ProSeinterFreqBandList, e.g., ProSeFreqNeedForGaps;
   for example: 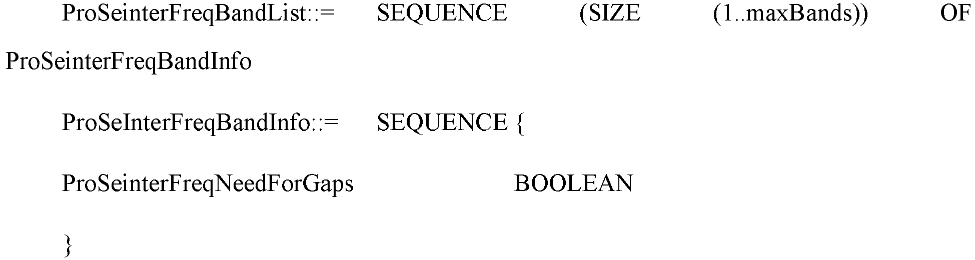
5) indication information about whether gaps are needed for receiving ProSe service data on each band in a proximity service inter-RAT band list ProSeinterRAT-BandList.

In step 3, after the base station receives the indication information about the UE capability, the base station may make the following judgment.

If the UE indicates, in a proximity service band list or a proximity service inter-frequency band list or a proximity service inter-RAT band list of parameters of a certain band, e.g., band 1, that gaps are not needed on a certain corresponding band, e.g., band 1, or indicates, in a proximity service band list, that data can be received simultaneously or in parallel on a certain corresponding band, e.g., band 1, it indicates that the UE can receive proximity service data and cellular service data simultaneously or in parallel on band 1, e.g., receive proximity service data on an uplink band corresponding to band 1 and receive cellular service data on a downlink band corresponding to band 1. Otherwise, it indicates that the UE cannot receive proximity service data and cellular service data simultaneously or in parallel on band 1.

If the UE indicates, in a proximity service band list or a proximity service inter-frequency band list or a proximity service inter-RAT band list of parameters of a certain band, e.g., band 2, that gaps are not needed on a certain corresponding band, e.g., band 1, or indicates, in a proximity service band list, that data can be received simultaneously or in parallel on a certain corresponding band, e.g., band 1, it indicates that the UE can receive proximity service data and cellular service data simultaneously or in parallel on band 1 and band 2. Otherwise, it indicates that the UE cannot receive proximity service data and cellular service data simultaneously or in parallel on band 1 and band 2.

Similarly, if the UE indicates, in a proximity service band list or a proximity service inter-frequency band list or a proximity service inter-RAT band list of parameters of a certain band set, e.g., band 1 and band 2, that gaps are not needed on a certain corresponding band, e.g., band 1, or indicates, in a proximity service band list, that data can be received simultaneously or in parallel on a certain corresponding band, e.g., band 1, it indicates that the UE can receive cellular service data simultaneously or in parallel on band 1 and band 2, and can receive proximity service data and cellular service data simultaneously or in parallel on band 1, e.g., receive proximity service data on an uplink band corresponding to band 1 and receive cellular service data on a downlink band corresponding to band 1. Otherwise, it indicates that the UE cannot receive proximity service data and cellular service data simultaneously on band 1.

According to the above-mentioned information, the base station may determine bands on which the UE can receive cellular communication data simultaneously, bands on which the UE can receive proximity service data simultaneously, and bands on which the UE can receive cellular communication and proximity service data simultaneously. After the base station subsequently receive a D2D discovery or communication request allocation indication of the UE, the base station may allocate suitable service resources to the UE.

### Alternative implementation eighteen

In step 1, a base station transmits indication information to UE, herein the indication information, e.g., UECapabilityEnquiry, is used for requesting to acquire a UE capability.

In step 2, the UE reports, to the base station, band parameter information of bands on which proximity service data can be simultaneously received/transmitted and band parameter information of bands on which cellular service data can be simultaneously received/transmitted, which may include various combinations, herein each band parameter may include but not limited to at least one of the following:
(1) frequency information of band;
(2) indication information indicating whether a ProSe-discovery signal is received or transmitted on a band;
(3) indication information indicating whether a ProSe-communication signal is received or transmitted on a band;

An alternative information indication unit is as follow:

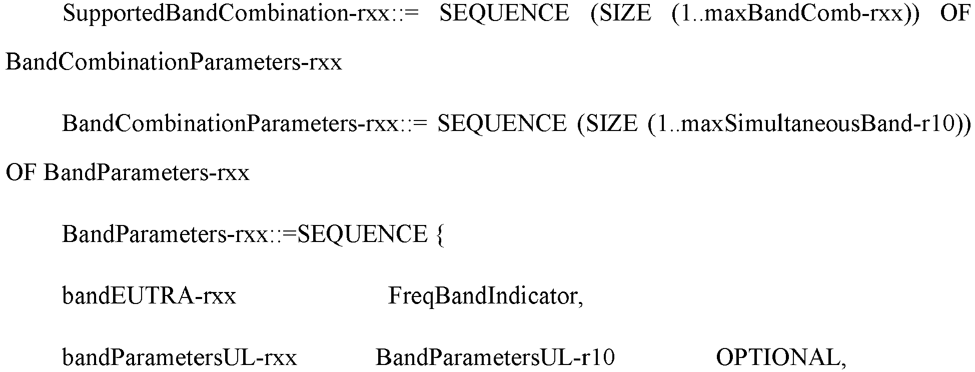

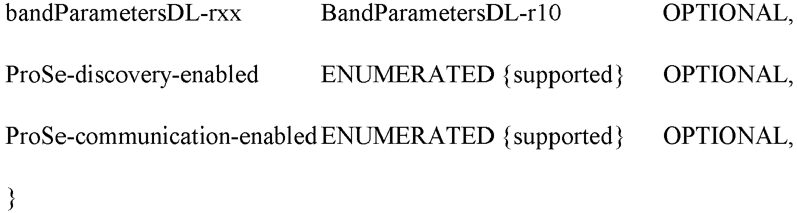

According to the above-mentioned information, the base station may determine frequencies on which the UE can receive proximity service data and frequencies on which the UE has cellular communication supporting capability, related uplink CA capability and MIMO capability and related downlink CA capability and MIMO capability while proximity service data are received on each indicated frequency, herein the CA capability and MIMO capability are indicated in the bandParametersUL-rxx and bandParametersDL-rxx.

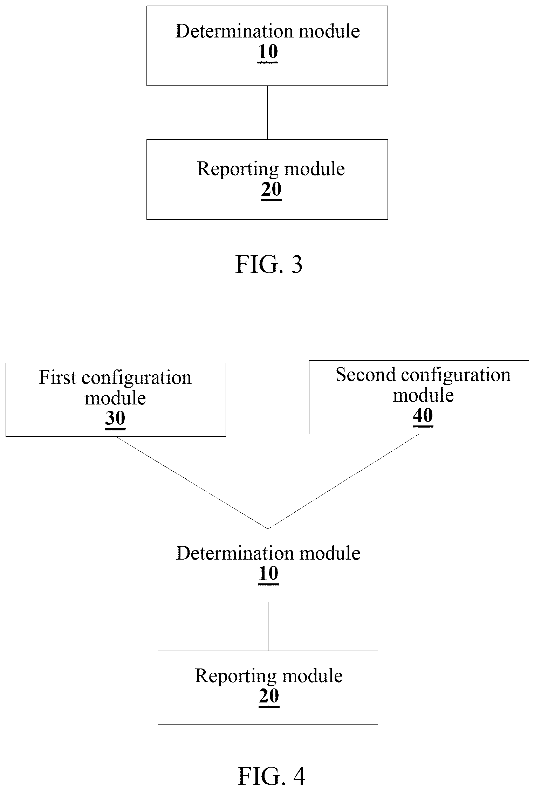

FIG. 3 illustrates a structural diagram of an apparatus for reporting information about a proximity service supporting capability according to one implementation of the present disclosure. As illustrated in FIG. 3, the apparatus for reporting the information about the proximity service supporting capability is arranged at a first communication node and may include the following modules. A determination module 10 is configured to determine indication information to be reported, herein the indication information is used for indicating information about a proximity service supporting capability of the first communication node. A reporting module 20 is arranged to report the indication information to a second communication node.

By adopting the apparatus illustrated in FIG. 3, the problem that a base station cannot know whether UE has the ProSe supporting capability in the related technology is solved, the first communication node can realize the reporting of the ProSe supporting capability at smaller overhead, the second communication node can reasonably and effectively allocate ProSe service and/or cellular network service resources to the first communication node after capability information is acquired, and thus the interference and influence between ProSe services and cellular network services are minimized.

In an alternative implementation process, the above-mentioned first communication node may be User Equipment UE, and the second communication node may be a base station.

In an exemplary implementation, the information about the proximity service supporting capability may include but not limited to at least one of the following information:
(1) indication information about supporting a proximity service;
(2) indication information about supporting proximity service receiving and/or transmitting;
(3) indication information about all bands which correspond to all indicated bands and on which receiving and/or transmitting proximity services is supported;
(4) indication information about uplink bands which correspond to all indicated bands and on which receiving and/or transmitting proximity services is supported;
(5) indication information about downlink bands which correspond to all indicated bands and on which receiving and/or transmitting proximity services is supported;
(6) indication information about all bands which correspond to specially indicated bands and on which receiving and/or transmitting proximity services is supported;
(7) indication information about uplink bands which correspond to specially indicated bands and on which receiving and/or transmitting proximity services is supported;
(8) indication information about downlink bands which correspond to specially indicated bands and on which receiving and/or transmitting proximity services is supported;
(9) indication information about a parameter combination consisting of a band parameter set of bands for cellular communication and a band parameter set of bands for proximity services, in which the cellular communication and the proximity services are supported to be performed simultaneously;
(10) band class information of bands supporting proximity services;
(11) a band parameter set of bands on which simultaneous reception of cellular communication and proximity services is supported;
(12) a band parameter set of bands on which receiving and/or transmitting proximity services is supported;
(13) indication information about having a receiver dedicated for supporting a proximity service;
(14) indication information about having a transmitter dedicated for supporting a proximity service;
(15) indication information about the number of all receiving links;
(16) indication information about the number of all transmitting links;
(17) indication information about the number of receiving links supporting proximity services;
(18) indication information about the number of transmitting links supporting proximity services;
(19) indication information about whether gaps are required when proximity services are received on indicated bands; and
(20) indication information about whether proximity services are capable of being received simultaneously or in parallel on indicated bands.

Herein, the above-mentioned proximity service comprise at least one of the following: a ProSe discovery and a ProSe communication; the uplink band is a uplink frequency configured in a system to which the first communication node is connected or in which the first communication node resides currently; the downlink band is a downlink frequency configured in a system to which the first communication node is connected or in which the first communication node resides currently; and the system comprises at least one of the following: EUTRA and UTRA

In an exemplary implementation, as illustrated in FIG. 4, the apparatus may further include the following modules. A first configuration module 30 is arranged to pre-configure with the second communication node to complete a corresponding relationship between all band ranges supported by the first communication node and band index value combinations, herein each band range in the corresponding relationship respectively corresponds to a band index value.

In an exemplary implementation, the determination module 10 is arranged to determine the indication information according to one of the following modes.
(1) Under a situation of simultaneously supporting receiving and transmitting EUTRA network data in a band range corresponding to a first index value combination and receiving and transmitting proximity service data in a band range corresponding to a second index value combination, it is determined that the first index value combination and the second index value combination need to be reported to the second communication node, herein each of the first index value combination and the second index value combination includes one or more index values, and each index value in the one or more index values is respectively carried in a band parameter information unit.
(2) Under a situation of not supporting simultaneously receiving and transmitting EUTRA network data in a band range corresponding to a first index value combination and receiving and transmitting proximity service data in a band range corresponding to a second index value combination, it is determined that the first index value combination or the second index value combination needs to be reported to the second communication node, herein each of the first index value combination and the second index value combination includes one or more index values, and each index value in the one or more index values is respectively carried in a band parameter information unit.

In an exemplary implementation, as illustrated in FIG. 4, the above-mentioned apparatus may further include: a second configuration module 40 which is arranged to pre-configure with the second communication node to complete a corresponding relationship between all proximity service band ranges supported by a receiver and/or transmitter dedicated for a proximity service and band index values, herein in the corresponding relationship each proximity service band range respectively corresponds to a band index value, and the proximity service may include but not limited to at least one of the following: a ProSe discovery and a ProSe communication.

In an exemplary implementation, the determination module 10 is arranged to determine the indication information according to one of the following modes:
(1) Under a situation of configuring with the special receiver and/or transmitter for the proximity service by itself, it is determined that indication information about having the receiver and/or transmitter dedicated for the proximity service needs to be reported to the second communication node.
(2) Under a situation of acquiring index values corresponding to various bands from the corresponding relationship when the receiver and/or transmitter dedicated for the proximity service configured by the first communication node works at a plurality of bands, it is determined that a plurality of index value combinations needs to be reported to the second communication node.

In an exemplary implementation, the reporting module 20 is arranged to report the indication information to the second communication node according to one of the following modes.

In mode 1, the first communication node reports the indication information to the second communication node after receiving a request message from the second communication node, herein the request message is used for acquiring the information about the proximity service supporting capability.

In mode 2, the first communication node actively reports the indication information to the second communication node.

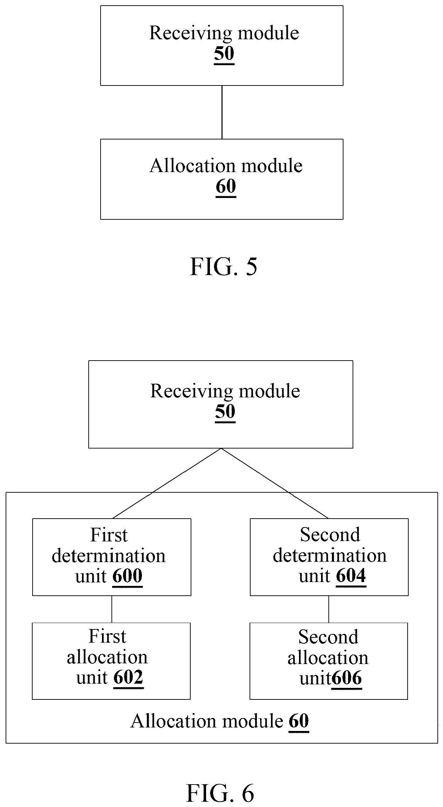

FIG. 5 illustrates a structural diagram of an apparatus for processing information about a proximity service supporting capability according to one implementation of the present disclosure. As illustrated in FIG. 5, the apparatus for processing the information about the proximity service supporting capability is arranged at a second communication node and may include the following modules. A receiving module 50 is arranged to receive indication information reported by a first communication node, herein the indication information is used for indicating information about a proximity service supporting capability of the first communication node. An allocation module 60 is arranged to allocate a proximity service resource and/or a cellular network service resource to the first communication node according to the indication information.

In an exemplary implementation, the information about the proximity service supporting capability may include but not limited to at least one of the following:
(1) indication information about supporting a proximity service;
(2) indication information about supporting proximity service receiving and/or transmitting;
(3) indication information about all bands which correspond to all indicated bands and on which receiving and/or transmitting proximity services is supported;
(4) indication information about uplink bands which correspond to all indicated bands and on which receiving and/or transmitting proximity services is supported;
(5) indication information about downlink bands which correspond to all indicated bands and on which receiving and/or transmitting proximity services is supported;
(6) indication information about all bands which correspond to specially indicated bands and on which receiving and/or transmitting proximity services is supported;
(7) indication information about uplink bands which correspond to specially indicated bands and on which receiving and/or transmitting proximity services is supported;
(8) indication information about downlink bands which correspond to specially indicated bands and on which receiving and/or transmitting proximity services is supported;
(9) indication information about a parameter combination consisting of a band parameter set of bands for cellular communication and a band parameter set of bands for proximity services, in which the cellular communication and the proximity services are supported to be performed simultaneously;
(10) band class information of bands supporting proximity services;
(11) a band parameter set of bands on which simultaneous reception of cellular communication and proximity services is supported;
(12) a band parameter set of bands on which receiving and/or transmitting proximity services is supported;
(13) indication information about having a receiver dedicated for supporting a proximity service;
(14) indication information about having a transmitter dedicated for supporting a proximity service;
(15) indication information about the number of all receiving links;
(16) indication information about the number of all transmitting links;
(17) indication information about the number of receiving links supporting proximity services;
(18) indication information about the number of transmitting links supporting proximity services;
(19) indication information about whether gaps are required when proximity services are received on indicated bands; and
(20) indication information about whether proximity services are capable of being received simultaneously or in parallel on indicated bands.

Herein, the above-mentioned proximity service comprise at least one of the following: a ProSe discovery and a ProSe communication; the uplink band is a uplink frequency configured in a system to which the first communication node is connected or in which the first communication node resides currently; the downlink band is a downlink frequency configured in a system to which the first communication node is connected or in which the first communication node resides currently; and the system comprises at least one of the following: EUTRA and UTRA

In an exemplary implementation, as illustrated in FIG. 6, the allocation module 60 may include the following units. A first determination unit 600 is arranged to determine that the first communication node has the proximity service supporting capability but does not support receiving and transmitting service data simultaneously in a plurality of band ranges according to the indication information. A first allocation unit 602 is arranged to allocate the proximity service resource and the cellular network service resource to the first communication node through a time-division multiplexing mode. Or the second communication node allocates a ProSe discovery resource and the cellular network service resource to the first communication node only through the time-division multiplexing mode

In an exemplary implementation, as illustrated in FIG. 6, the allocation module 60 may include the following units. A second determination unit 604 is arranged to determine that the first communication node has the proximity service supporting capability and supports simultaneously receiving and transmitting service data in a plurality of band ranges according to the indication information. A second allocation unit 606 is arranged to allocate the proximity service resource and the cellular network service resource to the first communication node through a time-division multiplexing mode. Or the second communication node allocates the proximity service resource and the cellular network service resource to the first communication node through a frequency-division multiplexing mode. Or the second communication node allocates a ProSe discovery resource and the cellular network service resource to the first communication node through the time-division multiplexing mode and allocates a ProSe communication resource and the cellular network service resource to the first communication node through the frequency-division multiplexing mode.

In an exemplary implementation, the receiving module 50 is arranged to receive the indication information reported by the first communication node according to one of the following modes.

In mode 1, the second communication receives the indication information reported by the first communication node after transmitting a request message to the first communication node, herein the request message is used for acquiring the information about the proximity service supporting capability.

In mode 2, the second communication node receives the indication information actively reported by the first communication node.

From the description above, it can be seen that the above-mentioned implementations realize the following technical effects (it needs to be stated that these effects are effects which can be achieved by some alternative implementations): by adopting the technical solutions provided by the implementations of the present disclosure, and by reporting the proximity service supporting capability through the first communication node, the second communication node hence can know that the first communication node has the ProSe supporting capability. Thereby, the problem that a base station cannot know whether UE has the ProSe supporting capability in the related technology is solved, the first communication node can realize the reporting of the ProSe supporting capability at smaller overhead, the second communication node can reasonably and effectively allocate ProSe service and/or cellular network service resources to the first communication node after capability information is acquired, and thus the interference and influence between ProSe services and cellular network services are minimized.

Obviously, one skilled in the art should understand that all modules or all steps of the above-mentioned present disclosure may be implemented by using general-purpose computing devices, they may be integrated in a single computing device or distributed on a network consisting of a plurality of computing devices, optionally they may be implemented by using program codes executable for computing devices, thus they may be stored in memory devices and executed by computing devices, and under certain circumstances, the illustrated or described steps may be executed according to a sequence different from the sequence here, or they may be respectively manufactured into integrated circuit modules or a plurality of modules or steps thereof may be manufactured into a single integrated circuit module to implement. Therefore, the present disclosure is not limited to any specific combination of hardware and software.

The implementations described above are just alternative implementations of the present disclosure and are not used for limiting the present disclosure.

### Industrial Applicability

As described above, the methods and apparatuses for reporting and processing the information about the proximity service supporting capability provided by the implementations of the present disclosure have the following beneficial effects: ProSe service and/or cellular network service resources can be reasonably and effectively allocated to the first communication node, and thus the interference and influence between ProSe services and cellular network services are minimized.

## Claims

1. A method for reporting information about a proximity service supporting capability, comprising:
determining (S102), by a first communication node, indication information to be reported, wherein the indication information is used for indicating information about a proximity service supporting capability of the first communication node; and
reporting (S104), by the first communication node, the indication information to a second communication node;
wherein the first communication node is a user equipment, UE, and the second communication node is a base station;
wherein the information about the proximity service supporting capability comprises:
indication information about uplink bands on which the UE supports receiving and transmitting proximity services; and
indication, for a particular band combination, of bands on which the UE supports simultaneous reception of cellular communication and proximity services;
wherein the proximity service comprises at least one of the following: a ProSe discovery and a ProSe communication; the uplink bands are uplink frequencies configured in a system to which the first communication node is connected or in which the first communication node resides currently; and the system comprises at least one of the following: Evolved Universal Terrestrial Radio Access, EUTRA, and Universal Terrestrial Radio Access, UTRA;
**characterized in that**
before the first communication node determines the indication information, the method further comprises:
pre-configuring, by the first communication node with the second communication node, to complete a corresponding relationship between all proximity service band ranges supported by a receiver and/or transmitter dedicated for the proximity service and band index values, wherein in the corresponding relationship each proximity service band range respectively corresponds to a band index value;
wherein the first communication node determining the indication information comprises at least one of the following:
determining, by the first communication node, that indication information about having the receiver and/or transmitter dedicated for the proximity service needs to be reported to the second communication node under a situation that the first communication node configures with the receiver and/or transmitter dedicated for the proximity service; and
determining, by the first communication node, that a plurality of index value combinations needs to be reported to the second communication node under a situation that the first communication node acquires index values corresponding to various bands from the corresponding relationship when the receiver and/or transmitter dedicated for the proximity service configured by the first communication node works at a plurality of bands.

2. The method according to claim 1, wherein, before the first communication node determines the indication information, the method further comprises:
pre-configuring, by the first communication node with the second communication node, to complete a corresponding relationship between all band ranges supported by the first communication node and band index value combinations, wherein in the corresponding relationship each band range respectively corresponds to a band index value;
preferably, wherein the first communication node determining the indication information comprises one of the following:
determining, by the first communication node, that a first index value combination and a second index value combination need to be reported to the second communication node under a situation that the first communication node supports simultaneously receiving and transmitting Evolved Universal Terrestrial Radio Access, EUTRA, network data in a band range corresponding to the first index value combination and receiving and transmitting proximity service data in a band range corresponding to the second index value combination, wherein each of the first index value combination and the second index value combination comprises one or more index values, and each index value in the one or more index values is respectively carried in a band parameter information unit; and
determining, by the first communication node, that a first index value combination or a second index value combination needs to be reported to the second communication node under a situation that the first communication node does not support simultaneously receiving and transmitting EUTRA network data in a band range corresponding to the first index value combination and receiving and transmitting proximity service data in a band range corresponding to the second index value combination, wherein each of the first index value combination and the second index value combination comprises one or more index values, and each index value in the one or more index values is respectively carried in a band parameter information unit.

3. The method according to claim 1 or 2, wherein the first communication node reporting the indication information to the second communication node comprises at least one of the following:
the first communication node reporting the indication information to the second communication node after receiving a request message from the second communication node, wherein the request message is used for acquiring the information about the proximity service supporting capability; and
the first communication node reporting actively the indication information to the second communication node.

4. A method for processing information about a proximity service supporting capability, comprising:
receiving (S202), by a second communication node, indication information reported by a first communication node, wherein the indication information is used for indicating information about a proximity service supporting capability of the first communication node; and
allocating (S204), by the second communication node, a proximity service resource and/or a cellular network service resource to the first communication node according to the indication information;
wherein the first communication node is a user equipment, UE, and the second communication node is a base station;
wherein the information about the proximity service supporting capability comprises:
indication information about uplink bands on which the UE supports receiving and transmitting proximity services; and
indication, for a particular band combination, of bands on which the UE supports simultaneous reception of cellular communication and proximity services;
wherein the proximity service comprises at least one of the following: a ProSe discovery and a ProSe communication; the uplink bands are uplink frequencies configured in a system to which the first communication node is connected or in which the first communication node resides currently; and the system comprises at least one of the following: Evolved Universal Terrestrial Radio Access, EUTRA, and Universal Terrestrial Radio Access, UTRA;
**characterized in that**
a corresponding relationship between all proximity service band ranges supported by a receiver and/or transmitter dedicated for the proximity service and band index values is pre-configured by the first communication node with the second communication node, wherein in the corresponding relationship each proximity service band range respectively corresponds to a band index value;
wherein the indication information reported by the first communication node comprises indication information about having the receiver and/or transmitter dedicated for the proximity service under a situation that the first communication node configures with the receiver and/or transmitter dedicated for the proximity service; and/or
the indication information reported by the first communication node comprises a plurality of index value combinations under a situation that the first communication node acquires index values corresponding to various bands from the corresponding relationship when the receiver and/or transmitter dedicated for the proximity service configured by the first communication node works at a plurality of bands.

5. The method according to claim 4, wherein the second communication node allocating the proximity service resource and/or the cellular network service resource to the first communication node according to the indication information comprises:
the second communication node determining that the first communication node has the proximity service supporting capability but does not support receiving and transmitting service data simultaneously in a plurality of band ranges according to the indication information; and
the second communication node allocating the proximity service resource and the cellular network service resource to the first communication node through a time-division multiplexing mode; or the second communication node allocating a ProSe discovery resource and the cellular network service resource to the first communication node only through the time-division multiplexing mode;
or,
wherein the second communication node allocating the proximity service resource and/or the cellular network service resource to the first communication node according to the indication information comprises:
the second communication node determining that the first communication node has the proximity service supporting capability and supports simultaneously receiving and transmitting service data in a plurality of band ranges according to the indication information; and
the second communication node allocating the proximity service resource and the cellular network service resource to the first communication node through a time-division multiplexing mode; or the second communication node allocating the proximity service resource and the cellular network service resource to the first communication node through a frequency-division multiplexing mode; or the second communication node allocating a ProSe discovery resource and the cellular network service resource to the first communication node through the time-division multiplexing mode and allocating a ProSe communication resource and the cellular network service resource to the first communication node through the frequency-division multiplexing mode.

6. The method according to claim 4 or 5, wherein the second communication node receiving the indication information reported by the first communication node comprises one of the following:
the second communication node receiving the indication information reported by the first communication node after transmitting a request message to the first communication node, wherein the request message is used for acquiring the information about the proximity service supporting capability; and
the second communication node receiving the indication information actively reported by the first communication node.

7. An apparatus for reporting information about a proximity service supporting capability, the apparatus arranged on a first communication node, and the apparatus comprising:
a determination module (10), arranged to determine indication information to be reported, wherein the indication information is used for indicating information about a proximity service supporting capability of the first communication node; and
a reporting module (20), arranged to report the indication information to a second communication node;
wherein the first communication node is a user equipment, UE, and the second communication node is a base station;
wherein the information about the proximity service supporting capability comprises:
indication information about uplink bands on which the UE supports receiving and transmitting proximity services; and
indication, for a particular band combination, of bands on which the UE supports simultaneous reception of cellular communication and proximity services;
wherein the proximity service comprises at least one of the following: a ProSe discovery and a ProSe communication; the uplink bands are uplink frequencies configured in a system to which the first communication node is connected or in which the first communication node resides currently; and the system comprises at least one of the following: Evolved Universal Terrestrial Radio Access, EUTRA, and Universal Terrestrial Radio Access, UTRA;
**characterized in that**
the apparatus further comprises a second configuration module (40), arranged to pre-configure with the second communication node to complete a corresponding relationship between all proximity service band ranges supported by a receiver and/or transmitter dedicated for the proximity service and band index values, wherein in the corresponding relationship each proximity service band range respectively corresponds to a band index value;
wherein the determination module is arranged to determine the indication information according to at least one of the following:
determining that indication information about having the receiver and/or transmitter dedicated for the proximity service needs to be reported to the second communication node under a situation of configuring with the receiver and/or transmitter dedicated for the proximity service by the first communication node; and
determining that a plurality of index value combinations needs to be reported to the second communication node under a situation of acquiring index values corresponding to various bands from the corresponding relationship when the receiver and/or transmitter dedicated for the proximity service configured by the first communication node works at a plurality of bands.

8. The apparatus according to claim 7, wherein the apparatus further comprises:
a first configuration module (30), arranged to pre-configure with the second communication node to complete a corresponding relationship between all band ranges supported by the first communication node and band index value combinations, wherein in the corresponding relationship each band range respectively corresponds to a band index value;
preferably, wherein the determination module (10) is arranged to determine the indication information according to one of the following:
determining that a first index value combination and a second index value combination need to be reported to the second communication node under a situation of simultaneously supporting receiving and transmitting Evolved Universal Terrestrial Radio Access, EUTRA, network data in a band range corresponding to the first index value combination and receiving and transmitting proximity service data in a band range corresponding to the second index value combination, wherein each of the first index value combination and the second index value combination comprises one or more index values, and each index value in the one or more index values is respectively carried in a band parameter information unit; and
determining that a first index value combination or a second index value combination needs to be reported to the second communication node under a situation of not supporting simultaneously receiving and transmitting EUTRA network data in a band range corresponding to the first index value combination and receiving and transmitting proximity service data in a band range corresponding to the second index value combination, wherein each of the first index value combination and the second index value combination comprises one or more index values, and each index value in the one or more index values is respectively carried in a band parameter information unit.

9. An apparatus for processing information about a proximity service supporting capability, the apparatus arranged on a second communication node, and the apparatus comprising:
a receiving module (50), arranged to receive indication information reported by a first communication node, wherein the indication information is used for indicating information about a proximity service supporting capability of the first communication node; and
an allocation module (60), arranged to allocate a proximity service resource and/or a cellular network service resource to the first communication node according to the indication information;
wherein the first communication node is a user equipment, UE, and the second communication node is a base station;
wherein the information about the proximity service supporting capability comprises:
indication information about uplink bands on which the UE supports receiving and transmitting proximity services; and
indication, for a particular band combination, of bands on which the UE supports simultaneous reception of cellular communication and proximity services;
wherein the proximity service comprises at least one of the following: a ProSe discovery and a ProSe communication; the uplink bands are uplink frequencies configured in a system to which the first communication node is connected or in which the first communication node resides currently; and the system comprises at least one of the following: Evolved Universal Terrestrial Radio Access, EUTRA, and Universal Terrestrial Radio Access, UTRA;
**characterized in that**
a corresponding relationship between all proximity service band ranges supported by a receiver and/or transmitter dedicated for the proximity service and band index values is pre-configured by the first communication node with the second communication node, wherein in the corresponding relationship each proximity service band range respectively corresponds to a band index value;
wherein the indication information reported by the first communication node comprises indication information about having the receiver and/or transmitter dedicated for the proximity service under a situation that the first communication node configures with the receiver and/or transmitter dedicated for the proximity service; and/or
the indication information reported by the first communication node comprises a plurality of index value combinations under a situation that the first communication node acquires index values corresponding to various bands from the corresponding relationship when the receiver and/or transmitter dedicated for the proximity service configured by the first communication node works at a plurality of bands.

10. The apparatus according to claim 9, wherein
the allocation module (60) comprises:
a first determination unit (600), arranged to determine that the first communication node has the proximity service supporting capability but does not support receiving and transmitting service data simultaneously in a plurality of band ranges according to the indication information; and
a first allocation unit (602), arranged to allocate the proximity service resource and the cellular network service resource to the first communication node through a time-division multiplexing mode; or allocate a ProSe discovery resource and the cellular network service resource to the first communication node only through the time-division multiplexing mode;
the allocation module (60) comprises:
a second determination unit (604), arranged to determine that the first communication node has the proximity service supporting capability and supports simultaneously receiving and transmitting service data in a plurality of band ranges according to the indication information; and
a second allocation unit (606), arranged to allocate the proximity service resource and the cellular network service resource to the first communication node through a time-division multiplexing mode; or allocate the proximity service resource and the cellular network service resource to the first communication node through a frequency-division multiplexing mode; or allocate a ProSe discovery resource and the cellular network service resource to the first communication node through the time-division multiplexing mode and allocate a ProSe communication resource and the cellular network service resource to the first communication node through the frequency-division multiplexing mode.

## Patentansprüche

1. Verfahren zum Berichten einer Information über die Unterstützung eines Proximitätsdiensts, umfassend:
Bestimmen (S102) einer zu berichtenden Angabe durch einen ersten Kommunikationsknoten, wobei die Angabe zum Angeben einer Information über die Unterstützung eines Proximitätsdiensts des ersten Kommunikationsknoten verwendet wird; und
Berichten (S104) der Angabe einem zweiten Kommunikationsknoten durch den ersten Kommunikationsknoten;
wobei der erste Kommunikationsknoten ein Endgerät, UE, und der zweite Kommunikationsknoten eine Basisstation ist;
wobei die Information über die Unterstützung des Proximitätsdiensts umfasst:
Angabe von Uplinkbänden, in denen das UE das Empfangen und das Senden des Proximitätsdiensts unterstützt; und
Angabe einer bestimmten Bandkombination aus Bänden, in denen das UE ein gleichzeitiges Empfangen einer Mobilfunkkommunikation und eines Proximitätsdiensts unterstützt;
wobei der Proximitätsdienst zumindest eine von ProSe-Entdeckung und ProSe-Kommunikation umfasst; wobei es sich bei den Uplinkbänden um Uplinkfrequenzen, die in einem System, mit dem der erste Kommunikationsknoten verbunden ist oder in dem sich der erste Kommunikationsknoten aktuell befindet, konfiguriert sind; und das System zumindest eines von Evolved-Universal-Terrestrial-Radio-Access, EUTRA, und Universal-Terrestrial-Radio-Access, UTRA, umfasst;
**dadurch gekennzeichnet,**
**dass** vor dem Bestimmen der Angabe durch den ersten Kommunikationsknoten das Verfahren weiterhin umfasst:
Vorkonfigurieren eines entsprechenden Verhältnisses zwischen allen von einem für den Proximitätsdienst dedizierten Empfänger und/oder Sender unterstützten Proximitätsdienst-Bandbreiten und Bandindexwerten durch den ersten Kommunikationsknoten zusammen mit dem zweiten Kommunikationsknoten, wobei im entsprechenden Verhältnis jede der Proximitätsdienst-Bandbreiten einem Bandindexwert entspricht;
wobei das Bestimmen der Angabe durch den ersten Kommunikationsknoten zumindest einen der folgenden Schritte umfasst:
Bestimmen durch den ersten Kommunikationsknoten, dass dem zweiten Kommunikationsknoten die Angabe der Verfügbarkeit des für den Proximitätsdienst dedizierten Empfängers und/oder Senders berichtet werden soll, wenn der erste Kommunikationsknoten mit dem für den Proximitätsdienst dedizierten Empfänger und/oder Sender ausgestattet ist; und
Bestimmen durch den ersten Kommunikationsknoten, dass dem zweiten Kommunikationsknoten eine Vielzahl von Indexwertkombinationen berichtet werden soll, wenn beim für den Proximitätsdienst dedizierten Empfänger und/oder Sender, der durch den ersten Kommunikationsknoten zum Betrieb in mehreren Bandbreiten konfiguriert ist, der erste Kommunikationsknoten die den einzelnen Bandbreiten entsprechenden Indexwerte aus dem entsprechenden Verhältnis ermittelt.

2. Verfahren nach Anspruch 1, wobei vor dem Bestimmen der Angabe durch den ersten Kommunikationsknoten das Verfahren weiterhin umfasst:
Vorkonfigurieren eines entsprechenden Verhältnisses zwischen allen vom ersten Kommunikationsknoten unterstützten Bandbreiten und Bandindexwertkombinationen durch den ersten Kommunikationsknoten zusammen mit dem zweiten Kommunikationsknoten, wobei im entsprechenden Verhältnis jede der Bandbreiten einem Bandindexwert entspricht;
wobei vorzugsweise das Bestimmen der Angabe durch den ersten Kommunikationsknoten einen der folgenden Schritte umfasst:
Bestimmen durch den ersten Kommunikationsknoten, dass eine erste Indexwertkombination und eine zweite Indexwertkombination dem zweiten Kommunikationsknoten berichtet werden sollen, wenn der erste Kommunikationsknoten das Empfangen und Senden von Netzwerkdaten eines Evolved-Universal-Terrestrial-Radio-Access, EUTRA, in einer der ersten Indexwertkombination entsprechenden Bandbreite und das Empfangen und Senden von Proximitätsdienst-Daten in einer der zweiten Indexwertkombination entsprechenden Bandbreite gleichzeitig unterstützt, wobei die erste Indexwertkombination und die zweite Indexwertkombination jeweils einen oder mehrere Indexwerte umfasst, und jeder der Indexwerte jeweils von einer Bandparameterinformationseinheit getragen ist; und
Bestimmen durch den ersten Kommunikationsknoten, dass eine erste Indexwertkombination oder eine zweite Indexwertkombination dem zweiten Kommunikationsknoten berichtet werden soll, wenn der erste Kommunikationsknoten das Empfangen und Senden von Netzwerkdaten eines EUTRA in einer der ersten Indexwertkombination entsprechenden Bandbreite und das Empfangen und Senden von Proximitätsdienst-Daten in einer der zweiten Indexwertkombination entsprechenden Bandbreite nicht gleichzeitig unterstützt, wobei die erste Indexwertkombination und die zweite Indexwertkombination jeweils einen oder mehrere Indexwerte umfasst, und jeder der Indexwerte jeweils von einer Bandparameterinformationseinheit getragen ist.

3. Verfahren nach Anspruch 1 oder 2, wobei das Berichten der Angabe dem zweiten Kommunikationsknoten durch den ersten Kommunikationsknoten zumindest einen der folgenden Schritte umfasst:
Berichten der Angabe dem zweiten Kommunikationsknoten durch den ersten Kommunikationsknoten nach dem Empfangen einer Anfragenachricht vom zweiten Kommunikationsknoten, wobei die Anfragenachricht zum Ermitteln der Information über die Unterstützung des Proximitätsdiensts verwendet wird; und
aktives Berichten der Angabe dem zweiten Kommunikationsknoten durch den ersten Kommunikationsknoten.

4. Verfahren zum Verarbeiten einer Information über die Unterstützung eines Proximitätsdiensts, umfassend:
Empfangen (S202) einer von einem ersten Kommunikationsknoten berichteten Angabe durch einen zweiten Kommunikationsknoten, wobei die Angabe zum Angeben einer Information über die Unterstützung eines Proximitätsdiensts des ersten Kommunikationsknoten verwendet wird; und
Zuweisen (S204) einer Proximitätsdienst-Ressource und/oder einer Mobilfunknetzdienst-Ressource dem ersten Kommunikationsknoten durch den zweiten Kommunikationsknoten gemäß der Angabe;
wobei der erste Kommunikationsknoten ein Endgerät, UE, und der zweite Kommunikationsknoten eine Basisstation ist;
wobei die Information über die Unterstützung des Proximitätsdiensts umfasst:
Angabe von Uplinkbänden, in denen das UE das Empfangen und das Senden des Proximitätsdiensts unterstützt; und
Angabe einer bestimmten Bandkombination aus Bänden, in denen das UE ein gleichzeitiges Empfangen einer Mobilfunkkommunikation und eines Proximitätsdiensts unterstützt;
wobei der Proximitätsdienst zumindest eine von ProSe-Entdeckung und ProSe-Kommunikation umfasst; wobei es sich bei den Uplinkbänden um Uplinkfrequenzen, die in einem System, mit dem der erste Kommunikationsknoten verbunden ist oder in dem sich der erste Kommunikationsknoten aktuell befindet, konfiguriert sind; und das System zumindest eines von Evolved-Universal-Terrestrial-Radio-Access, EUTRA, und Universal-Terrestrial-Radio-Access, UTRA, umfasst;
**dadurch gekennzeichnet,**
**dass** ein entsprechendes Verhältnis zwischen allen von einem für den Proximitätsdienst dedizierten Empfänger und/oder Sender unterstützten Proximitätsdienst-Bandbreiten und Bandindexwerten durch den ersten Kommunikationsknoten zusammen mit dem zweiten Kommunikationsknoten vorkonfiguriert ist, wobei im entsprechenden Verhältnis jede der Proximitätsdienst-Bandbreiten einem Bandindexwert entspricht;
wobei die vom ersten Kommunikationsknoten berichtete Angabe eine Angabe der Verfügbarkeit des für den Proximitätsdienst dedizierten Empfängers und/oder Senders umfasst, wenn der erste Kommunikationsknoten mit dem für den Proximitätsdienst dedizierten Empfänger und/oder Sender ausgestattet ist;
und/oder
die vom ersten Kommunikationsknoten berichtete Angabe eine Vielzahl von Indexwertkombinationen umfasst, wenn beim für den Proximitätsdienst dedizierten Empfänger und/oder Sender, der durch den ersten Kommunikationsknoten zum Betrieb in mehreren Bandbreiten konfiguriert ist, der erste Kommunikationsknoten die den einzelnen Bandbreiten entsprechenden Indexwerte aus dem entsprechenden Verhältnis ermittelt.

5. Verfahren nach Anspruch 4, wobei das Zuweisen der Proximitätsdienst-Ressource und/oder der Mobilfunknetzdienst-Ressource dem ersten Kommunikationsknoten durch den zweiten Kommunikationsknoten gemäß der Angabe umfasst:
Bestimmen durch den zweiten Kommunikationsknoten gemäß der Angabe, dass der erste Kommunikationsknoten die Unterstützung des Proximitätsdiensts aufweist, aber das gleichzeitige Empfangen und Senden der Dienstdaten in einer Vielzahl von Bandbreiten nicht unterstützt; und
Zuweisen der Proximitätsdienst-Ressource und der Mobilfunknetzdienst-Ressource dem ersten Kommunikationsknoten in einem Zeitmultiplexverfahren durch den zweiten Kommunikationsknoten; oder Zuweisen einer ProSe-Entdeckungsressource und der Mobilfunknetzdienst-Ressource dem ersten Kommunikationsknoten lediglich im Zeitmultiplexverfahren durch den zweiten Kommunikationsknoten; oder
wobei das Zuweisen der Proximitätsdienst-Ressource und/oder der Mobilfunknetzdienst-Ressource dem ersten Kommunikationsknoten durch den zweiten Kommunikationsknoten gemäß der Angabe umfasst:
Bestimmen durch den zweiten Kommunikationsknoten gemäß der Angabe, dass der erste Kommunikationsknoten die Unterstützung des Proximitätsdiensts aufweist und das gleichzeitige Empfangen und Senden der Dienstdaten in einer Vielzahl von Bandbreiten unterstützt; und
Zuweisen der Proximitätsdienst-Ressource und der Mobilfunknetzdienst-Ressource dem ersten Kommunikationsknoten in einem Zeitmultiplexverfahren durch den zweiten Kommunikationsknoten; oder Zuweisen der Proximitätsdienst-Ressource und der Mobilfunknetzdienst-Ressource dem ersten Kommunikationsknoten in einem Frequenzmultiplexverfahren durch den zweiten Kommunikationsknoten; oder Zuweisen einer ProSe-Entdeckungsressource und der Mobilfunknetzdienst-Ressource dem ersten Kommunikationsknoten im Zeitmultiplexverfahren sowie Zuweisen einer ProSe-Entdeckungsressource und der Mobilfunknetzdienst-Ressource dem ersten Kommunikationsknoten im Frequenzmultiplexverfahren, durch den zweiten Kommunikationsknoten.

6. Verfahren nach Anspruch 4 oder 5, wobei das Empfangen der vom ersten Kommunikationsknoten berichteten Angabe durch den zweiten Kommunikationsknoten einen der folgenden Schritte umfasst:
Empfangen der vom ersten Kommunikationsknoten berichteten Angabe durch den zweiten Kommunikationsknoten nach dem Senden einer Anfragenachricht an den ersten Kommunikationsknoten, wobei die Anfragenachricht zum Ermitteln der Information über die Unterstützung des Proximitätsdiensts verwendet wird; und
Empfangen der vom ersten Kommunikationsknoten aktiv berichteten Angabe durch den zweiten Kommunikationsknoten.

7. Vorrichtung zum Berichten einer Information über die Unterstützung eines Proximitätsdiensts, die auf einem ersten Kommunikationsknoten angeordnet ist, umfassend:
ein Bestimmungsmodul (10), das dazu eingerichtet ist, eine Angabe zu berichten, wobei die Angabe zum Angeben einer Information über die Unterstützung eines Proximitätsdiensts des ersten Kommunikationsknoten verwendet wird; und
ein Berichtsmodul (20), das dazu eingerichtet ist, die Angabe einem zweiten Kommunikationsknoten zu berichten,
wobei der erste Kommunikationsknoten ein Endgerät, UE, und der zweite Kommunikationsknoten eine Basisstation ist;
wobei die Information über die Unterstützung des Proximitätsdiensts umfasst:
Angabe von Uplinkbänden, in denen das UE das Empfangen und das Senden des Proximitätsdiensts unterstützt; und
Angabe einer bestimmten Bandkombination aus Bänden, in denen das UE ein gleichzeitiges Empfangen einer Mobilfunkkommunikation und eines Proximitätsdiensts unterstützt;
wobei der Proximitätsdienst zumindest eine von ProSe-Entdeckung und ProSe-Kommunikation umfasst; wobei es sich bei den Uplinkbänden um Uplinkfrequenzen, die in einem System, mit dem der erste Kommunikationsknoten verbunden ist oder in dem sich der erste Kommunikationsknoten aktuell befindet, konfiguriert sind; und das System zumindest eines von Evolved-Universal-Terrestrial-Radio-Access, EUTRA, und Universal-Terrestrial-Radio-Access, UTRA, umfasst;
**dadurch gekennzeichnet,**
**dass** die Vorrichtung weiterhin ein zweites Konfigurationsmodul (40) umfasst, das dazu eingerichtet ist, zusammen mit dem zweiten Kommunikationsknoten ein entsprechendes Verhältnis zwischen allen von einem für den Proximitätsdienst dedizierten Empfänger und/oder Sender unterstützten Proximitätsdienst-Bandbreiten und Bandindexwerten vorzukonfigurieren, wobei im entsprechenden Verhältnis jede der Proximitätsdienst-Bandbreiten einem Bandindexwert entspricht;
wobei das Bestimmungsmodul dazu eingerichtet ist, die Angabe gemäß zumindest einer der folgenden Bedingungen zu bestimmen:
Bestimmen, dass dem zweiten Kommunikationsknoten die Angabe der Verfügbarkeit des für den Proximitätsdienst dedizierten Empfängers und/oder Senders berichtet werden soll, wenn der erste Kommunikationsknoten mit dem für den Proximitätsdienst dedizierten Empfänger und/oder Sender ausgestattet ist; und
Bestimmen, dass dem zweiten Kommunikationsknoten eine Vielzahl von Indexwertkombinationen berichtet werden soll, wenn beim für den Proximitätsdienst dedizierten Empfänger und/oder Sender, der durch den ersten Kommunikationsknoten zum Betrieb in mehreren Bandbreiten konfiguriert ist, die den einzelnen Bandbreiten entsprechenden Indexwerte aus dem entsprechenden Verhältnis ermittelt werden.

8. Vorrichtung nach Anspruch 7, wobei die Vorrichtung weiterhin umfasst:
ein erstes Konfigurationsmodul (30), das dazu eingerichtet ist, zusammen mit dem zweiten Kommunikationsknoten ein entsprechendes Verhältnis zwischen allen vom ersten Kommunikationsknoten unterstützten Bandbreiten und Bandindexwertkombinationen vorzukonfigurieren, wobei im entsprechenden Verhältnis jede der Bandbreiten einem Bandindexwert entspricht;
wobei vorzugsweise das Bestimmungsmodul (10) dazu eingerichtet ist, die Angabe gemäß einer der folgenden Bedingungen zu bestimmen:
Bestimmen, dass eine erste Indexwertkombination und eine zweite Indexwertkombination dem zweiten Kommunikationsknoten berichtet werden sollen, wenn das Empfangen und Senden von Netzwerkdaten eines Evolved-Universal-Terrestrial-Radio-Access, EUTRA, in einer der ersten Indexwertkombination entsprechenden Bandbreite und das Empfangen und Senden von Proximitätsdienst-Daten in einer der zweiten Indexwertkombination entsprechenden Bandbreite gleichzeitig unterstützt werden, wobei die erste Indexwertkombination und die zweite Indexwertkombination jeweils einen oder mehrere Indexwerte umfasst, und jeder der Indexwerte jeweils von einer Bandparameterinformationseinheit getragen ist; und
Bestimmen, dass eine erste Indexwertkombination oder eine zweite Indexwertkombination dem zweiten Kommunikationsknoten berichtet werden soll, wenn das Empfangen und Senden von Netzwerkdaten eines EUTRA in einer der ersten Indexwertkombination entsprechenden Bandbreite und das Empfangen und Senden von Proximitätsdienst-Daten in einer der zweiten Indexwertkombination entsprechenden Bandbreite nicht gleichzeitig unterstützt werden, wobei die erste Indexwertkombination und die zweite Indexwertkombination jeweils einen oder mehrere Indexwerte umfasst, und jeder der Indexwerte jeweils von einer Bandparameterinformationseinheit getragen ist.

9. Vorrichtung zum Verarbeiten einer Information über die Unterstützung eines Proximitätsdiensts, die auf einem zweiten Kommunikationsknoten angeordnet ist, umfassend:
ein Empfängermodul (50), das dazu eingerichtet ist, eine von einem ersten Kommunikationsknoten berichteten Angabe zu empfangen, wobei die Angabe zum Angeben einer Information über die Unterstützung eines Proximitätsdiensts des ersten Kommunikationsknoten verwendet wird; und
ein Zuweisungsmodul (60), das dazu eingerichtet ist, eine Proximitätsdienst-Ressource und/oder eine Mobilfunknetzdienst-Ressource dem ersten Kommunikationsknoten gemäß der Angabe zuzuweisen;
wobei der erste Kommunikationsknoten ein Endgerät, UE, und der zweite Kommunikationsknoten eine Basisstation ist;
wobei die Information über die Unterstützung des Proximitätsdiensts umfasst:
Angabe von Uplinkbänden, in denen das UE das Empfangen und das Senden des Proximitätsdiensts unterstützt; und
Angabe einer bestimmten Bandkombination aus Bänden, in denen das UE ein gleichzeitiges Empfangen einer Mobilfunkkommunikation und eines Proximitätsdiensts unterstützt;
wobei der Proximitätsdienst zumindest eine von ProSe-Entdeckung und ProSe-Kommunikation umfasst; wobei es sich bei den Uplinkbänden um Uplinkfrequenzen, die in einem System, mit dem der erste Kommunikationsknoten verbunden ist oder in dem sich der erste Kommunikationsknoten aktuell befindet, konfiguriert sind; und das System zumindest eines von Evolved-Universal-Terrestrial-Radio-Access, EUTRA, und Universal-Terrestrial-Radio-Access, UTRA, umfasst;
**dadurch gekennzeichnet,**
**dass** ein entsprechendes Verhältnis zwischen allen von einem für den Proximitätsdienst dedizierten Empfänger und/oder Sender unterstützten Proximitätsdienst-Bandbreiten und Bandindexwerten durch den ersten Kommunikationsknoten zusammen mit dem zweiten Kommunikationsknoten vorkonfiguriert ist, wobei im entsprechenden Verhältnis jede der Proximitätsdienst-Bandbreiten einem Bandindexwert entspricht;
wobei die vom ersten Kommunikationsknoten berichtete Angabe eine Angabe der Verfügbarkeit des für den Proximitätsdienst dedizierten Empfängers und/oder Senders umfasst, wenn der erste Kommunikationsknoten mit dem für den Proximitätsdienst dedizierten Empfänger und/oder Sender ausgestattet ist;
und/oder
die vom ersten Kommunikationsknoten berichtete Angabe eine Vielzahl von Indexwertkombinationen umfasst, wenn beim für den Proximitätsdienst dedizierten Empfänger und/oder Sender, der durch den ersten Kommunikationsknoten zum Betrieb in mehreren Bandbreiten konfiguriert ist, der erste Kommunikationsknoten die den einzelnen Bandbreiten entsprechenden Indexwerte aus dem entsprechenden Verhältnis ermittelt.

10. Vorrichtung nach Anspruch 9, wobei
das Zuweisungsmodul (60) umfasst:
eine erste Bestimmungseinheit (600), die dazu eingerichtet ist, gemäß der Angabe zu bestimmen, dass der erste Kommunikationsknoten die Unterstützung des Proximitätsdiensts aufweist, aber das gleichzeitige Empfangen und Senden der Dienstdaten in einer Vielzahl von Bandbreiten nicht unterstützt; und
eine erste Zuweisungseinheit (602), die dazu eingerichtet ist, der Proximitätsdienst-Ressource und der Mobilfunknetzdienst-Ressource dem ersten Kommunikationsknoten in einem Zeitmultiplexverfahren zuzuweisen; oder eine ProSe-Entdeckungsressource und die Mobilfunknetzdienst-Ressource dem ersten Kommunikationsknoten lediglich im Zeitmultiplexverfahren zuzuweisen;
das Zuweisungsmodul (60) umfasst:
eine zweite Bestimmungseinheit (604), die dazu eingerichtet ist, gemäß der Angabe zu bestimmen, dass der erste Kommunikationsknoten die Unterstützung des Proximitätsdiensts aufweist und das gleichzeitige Empfangen und Senden der Dienstdaten in einer Vielzahl von Bandbreiten unterstützt; und
eine zweite Zuweisungseinheit (606), die dazu eingerichtet ist, die Proximitätsdienst-Ressource und die Mobilfunknetzdienst-Ressource dem ersten Kommunikationsknoten in einem Zeitmultiplexverfahren zuzuweisen; oder die Proximitätsdienst-Ressource und die Mobilfunknetzdienst-Ressource dem ersten Kommunikationsknoten in einem Frequenzmultiplexverfahren zuzuweisen; oder eine ProSe-Entdeckungsressource und die Mobilfunknetzdienst-Ressource dem ersten Kommunikationsknoten im Zeitmultiplexverfahren sowie eine ProSe-Entdeckungsressource und die Mobilfunknetzdienst-Ressource dem ersten Kommunikationsknoten im Frequenzmultiplexverfahren zuzuweisen.

## Revendications

1. Procédé pour rapporter des informations sur une capacité de support de service de proximité, comprenant :
déterminer (S 102), par un premier nœud de communication, des informations indicatives à rapporter, dans lequel les informations indicatives sont utilisées pour indiquer des informations sur une capacité de support de service de proximité du premier nœud de communication ; et
rapporter (S 104), par le premier nœud de communication, les informations indicatives à un deuxième nœud de communication ;
dans lequel le premier nœud de communication est un équipement utilisateur, UE, et le deuxième nœud de communication est une station de base ;
dans lequel les informations sur la capacité de support de service de proximité comprennent :
des informations indicatives sur des bandes de liaison montante sur lesquelles l'UE supporte une réception et une transmission de services de proximité ; et
des indications, pour une combinaison de bandes particulière, des bandes sur lesquelles l'UE supporte simultanément la réception de communication cellulaire et des services de proximité ;
dans lequel le service de proximité comprend au moins l'un des suivants : une découverte ProSe et une communication ProSe ; les bandes de liaison montante sont des fréquences de liaison montante configurées dans un système auquel est connecté le premier nœud de communication ou dans lequel réside actuellement le premier nœud de communication ; et le système comprend au moins l'un des suivants : Accès à radio terrestre universel évolué, EUTRA, et Accès à radio terrestre universel, UTRA ;
**caractérisée en ce que**,
avant que le premier nœud de communication détermine les informations indicatives, le procédé comprend en outre :
pré-configurer, par le premier nœud de communication avec le deuxième nœud de communication, pour compléter une relation correspondante entre toutes les plages de bande de service de proximité supportées par un récepteur et/ou un émetteur dédié au service de proximité et des valeurs d'indice de bande, dans lequel chaque plage de bande de service de proximité dans la relation correspondante correspond respectivement à une valeur d'indice de bande ;
dans lequel l'étape de déterminer par le premier nœud de communication, les informations indicatives comprend au moins l'un des suivants :
déterminer, par le premier nœud de communication, que des informations indicatives sur l'obtention du récepteur et/ou de l'émetteur dédié au service de proximité doivent être rapportées au deuxième nœud de communication au cas où le premier nœud de communication configurerait avec le récepteur et/ou l'émetteur dédié au service de proximité ; et
déterminer, par le premier nœud de communication, qu'une pluralité de combinaisons de valeurs d'indice doit être rapportée au deuxième nœud de communication au cas où le premier nœud de communication acquiert des valeurs d'indice correspondant à diverses bandes depuis la relation correspondante lorsque le récepteur et/ou l'émetteur dédié au service de proximité configuré par le premier nœud de communication fonctionne sur une pluralité de bandes.

2. Procédé selon la revendication 1, dans lequel, avant que le premier nœud de communication détermine les informations indicatives, le procédé comprend en outre :
pré-configurer, par le premier nœud de communication avec le deuxième nœud de communication, pour compléter une relation correspondante entre toutes les plages de bande supportées par le premier nœud de communication et les combinaisons de valeurs d'indice de bande, dans lequel chaque plage de bande dans la relation correspondante correspond respectivement à une valeur d'indice de bande ;
de préférence, dans lequel l'étape de déterminer par le premier nœud de communication les informations indicatives comprend l'un des suivants :
déterminer, par le premier nœud de communication, qu'une première combinaison de valeurs d'indice et une deuxième combinaison de valeurs d'indice doivent être rapportées au deuxième nœud de communication au cas où le premier nœud de communication supporterait simultanément la réception et la transmission des données de réseau Accès à Radio Terrestre Universel évolué, EUTRA, dans une plage de bande correspondant à la première combinaison de valeurs d'indice et la réception et la transmission des données de service de proximité dans une plage de bande correspondant à la deuxième combinaison de valeurs d'indice, dans lequel chacune de la première combinaison de valeurs d'indice et de la deuxième combinaison de valeurs d'indice comprend une ou plusieurs valeurs d'index, et chaque valeur d'index dans la ou les valeurs d'index est respectivement véhiculée dans une unité d'information de paramètre de bande ; et
déterminer, par le premier nœud de communication, qu'une première combinaison de valeurs d'indice ou une deuxième combinaison de valeurs d'indice doivent être rapportées au deuxième nœud de communication au cas où le premier nœud de communication ne supporterait pas simultanément la réception et la transmission des données de réseau EUTRA dans une plage de bande correspondant à la première combinaison de valeurs d'indice et la réception et la transmission des données de service de proximité dans une plage de bande correspondant à la deuxième combinaison de valeurs d'indice, dans lequel chacune de la première combinaison de valeurs d'indice et de la deuxième combinaison de valeurs d'indice comprend une ou plusieurs valeurs d'index, et chaque valeur d'index dans la ou les valeurs d'index est respectivement véhiculée dans une unité d'information de paramètre de bande.

3. Procédé selon la revendication 1 ou 2, dans lequel l'étape de rapporter, par le premier nœud de communication, les informations indicatives au deuxième nœud de communication comprennent au moins l'un des suivants :
rapporter par le premier nœud de communication, les informations indicatives au deuxième nœud de communication une fois un message de demande reçu depuis le deuxième nœud de communication ; dans lequel le message de demande est utilisé pour acquérir les informations sur la capacité de support de service de proximité ; et
le premier nœud de communication rapporte les informations indicatives de manière active au deuxième nœud de communication.

4. Procédé pour traiter des informations sur une capacité de support de service de proximité, comprenant :
recevoir (S202), par un deuxième nœud de communication, des informations indicatives rapportées par le premier nœud de communication, dans lequel les informations indicatives sont utilisées pour indiquer des informations sur une capacité de support de service de proximité du premier nœud de communication ; et
allouer (S204), par le deuxième nœud de communication, une ressource de service de proximité et/ou une ressource de service de réseau cellulaire au premier nœud de communication en fonction des informations indicatives ;
dans lequel le premier nœud de communication est un équipement utilisateur, UE, et le deuxième nœud de communication est une station de base ;
dans lequel les informations sur la capacité de support de service de proximité comprennent :
des informations indicatives sur les bandes de liaison montante sur lesquelles l'UE supporte la réception et la transmission de services de proximité ; et
des indications, pour une combinaison de bandes particulière, des bandes sur lesquelles l'UE supporte simultanément la réception de communication cellulaire et des services de proximité ;
dans lequel le service de proximité comprend au moins l'un des suivants : une découverte ProSe et une communication ProSe ; les bandes de liaison montante sont des fréquences de liaison montante configurées dans un système auquel est connecté le premier nœud de communication ou dans lequel réside actuellement le premier nœud de communication ; et le système comprend au moins l'un des suivants : Accès à radio terrestre universel évolué, EUTRA, et Accès à radio terrestre universel, UTRA ;
**caractérisée en ce que**,
une relation correspondante entre toutes les plages de bande de service de proximité supportées par un récepteur et/ou un émetteur dédié au service de proximité et des valeurs d'indice de bande est pré-configurée par le premier nœud de communication avec le deuxième nœud de communication, dans lequel chaque plage de bande de service de proximité dans la relation correspondante correspond respectivement à une valeur d'indice de bande ;
dans lequel les informations indicatives rapportées par le premier nœud de communication comprennent des informations indicatives sur l'obtention du récepteur et/ou de l'émetteur dédié au service de proximité au cas où le premier nœud de communication configure avec le récepteur et/ou l'émetteur dédié au service de proximité ; et /ou
les informations indicatives rapportées par le premier nœud de communication comprennent une pluralité de combinaisons de valeurs d'indice au cas où le premier nœud de communication acquiert des valeurs d'indice correspondant à diverses bandes depuis la relation correspondante lorsque le récepteur et/ou l'émetteur dédié au service de proximité configuré par le premier nœud de communication fonctionne sur une pluralité de bandes.

5. Procédé selon la revendication 4, dans lequel l'étape d'allouer, par le deuxième nœud de communication, la ressource de service de proximité et/ou une ressource de service de réseau cellulaire au premier nœud de communication en fonction des informations indicatives comprend :
déterminer, par le deuxième nœud de communication, que le premier nœud de communication possède d'une capacité de support de service de proximité, mais ne supporte pas la réception et la transmission des données de service simultanément dans une pluralité de plages de bande en fonction des informations indicatives ; et
allouer, par le deuxième nœud de communication, la ressource de service de proximité et la ressource de service de réseau cellulaire au premier nœud de communication par l'intermédiaire d'un mode de multiplexage à répartition temporelle ; ou allouer, par le deuxième nœud de communication, une ressource de découverte ProSe et la ressource de service de réseau cellulaire au premier nœud de communication seulement par l'intermédiaire du mode de multiplexage à répartition temporelle ;
ou,
dans lequel l'étape d'allouer, par le deuxième nœud de communication, la ressource de service de proximité et/ou la ressource de service de réseau cellulaire au premier nœud de communication en fonction des informations indicatives comprend :
déterminer, par le deuxième nœud de communication, que le premier nœud de communication possède de la capacité de support de service de proximité et supporte la réception et la transmission des données de service simultanément dans une pluralité de plages de bande en fonction des informations indicatives ; et
allouer, par le deuxième nœud de communication, la ressource de service de proximité et la ressource de service de réseau cellulaire au premier nœud de communication par l'intermédiaire d'un mode de multiplexage à répartition temporelle ; ou allouer, par le deuxième nœud de communication, la ressource de service de proximité et la ressource de service de réseau cellulaire au premier nœud de communication par l'intermédiaire d'un mode de multiplexage à répartition fréquentielle ; ou allouer, par le deuxième nœud de communication, une ressource de découverte ProSe et la ressource de service de réseau cellulaire au premier nœud de communication par l'intermédiaire du mode de multiplexage à répartition temporelle et allouer une ressource de communication ProSe et la ressource de service de réseau cellulaire au premier nœud de communication par l'intermédiaire du mode de multiplexage à répartition fréquentielle.

6. Procédé selon la revendication 4 ou 5, dans lequel l'étape de recevoir par le deuxième nœud de communication, les informations indicatives rapportées par le premier nœud de communication comprend l'un des suivants :
recevoir par le deuxième nœud de communication, les informations indicatives rapportées par le premier nœud de communication une fois un message de demande transmis au premier nœud de communication, dans lequel le message de demande est utilisé pour acquérir les informations sur la capacité de support de service de proximité ; et
recevoir par le deuxième nœud de communication, les informations indicatives rapportées de manière active par le premier nœud de communication.

7. Dispositif pour rapporter des informations sur une capacité de support de service de proximité, qui est disposé sur un premier nœud de communication et comprend :
un module de détermination (10), configuré pour déterminer des informations indicatives à rapporter, dans lequel les informations indicatives sont utilisées pour indiquer des informations sur une capacité de support de service de proximité du premier nœud de communication ; et
un module de rapport (20), configuré pour rapporter les informations indicatives à un deuxième nœud de communication ;
dans lequel le premier nœud de communication est un équipement utilisateur, UE, et le deuxième nœud de communication est une station de base ;
dans lequel les informations sur la capacité de support de service de proximité comprennent :
des informations indicatives sur des bandes de liaison montante sur lesquelles l'UE supporte une réception et une transmission de services de proximité ; et
des indications, pour une combinaison de bandes particulière, des bandes sur lesquelles l'UE supporte simultanément la réception de communication cellulaire et des services de proximité ;
dans lequel le service de proximité comprend au moins l'un des suivants : une découverte ProSe et une communication ProSe ; les bandes de liaison montante sont des fréquences de liaison montante configurées dans un système auquel est connecté le premier nœud de communication ou dans lequel réside actuellement le premier nœud de communication ; et le système comprend au moins l'un des suivants : Accès à radio terrestre universel évolué, EUTRA, et Accès à radio terrestre universel, UTRA ;
**caractérisée en ce que**,
le dispositif comprend en outre un deuxième module de configuration (40), configuré pour pré-configurer avec le deuxième nœud de communication, pour compléter une relation correspondante entre toutes les plages de bande de service de proximité supportées par un récepteur et/ou un émetteur dédié au service de proximité et des valeurs d'indice de bande, dans lequel chaque plage de bande de service de proximité dans la relation correspondante correspond respectivement à une valeur d'indice de bande ;
dans lequel le module de détermination est configuré pour déterminer les informations indicatives en fonction d'au moins l'un des suivants :
déterminer que des informations indicatives sur l'obtention du récepteur et/ou de l'émetteur dédié au service de proximité doivent être rapportées au deuxième nœud de communication au cas où le premier nœud de communication configure avec le récepteur et/ou l'émetteur dédié au service de proximité ; et
déterminer qu'une pluralité de combinaisons de valeurs d'indice doit être rapportée au deuxième nœud de communication en cas d'acquérir des valeurs d'indice correspondant à diverses bandes depuis la relation correspondante lorsque le récepteur et/ou l'émetteur dédié au service de proximité configuré par le premier nœud de communication fonctionne sur une pluralité de bandes.

8. Dispositif selon la revendication 7, dans lequel le dispositif comprend en outre :
un premier module de configuration (30), configuré pour pré-configurer avec le deuxième nœud de communication pour compléter une relation correspondante entre toutes les plages de bande supportées par le premier nœud de communication et les combinaisons de valeurs d'indice de bande, dans lequel chaque plage de bande dans la relation correspondante correspond respectivement à une valeur d'indice de bande ;
de préférence, dans lequel le module de détermination (10) est configuré pour déterminer les informations indicatives en fonction de l'un des suivants :
déterminer qu'une première combinaison de valeurs d'indice et une deuxième combinaison de valeurs d'indice doivent être rapportées au deuxième nœud de communication en cas de supporter simultanément la réception et la transmission des données de réseau Accès à Radio Terrestre Universel évolué, EUTRA, dans une plage de bande correspondant à la première combinaison de valeurs d'indice et la réception et la transmission des données de service de proximité dans une plage de bande correspondant à la deuxième combinaison de valeurs d'indice, dans lequel chacune de la première combinaison de valeurs d'indice et de la deuxième combinaison de valeurs d'indice comprend une ou plusieurs valeurs d'index, et chaque valeur d'index dans la ou les valeurs d'index est respectivement véhiculée dans une unité d'information de paramètre de bande ; et
déterminer qu'une première combinaison de valeurs d'indice ou une deuxième combinaison de valeurs d'indice doivent être rapportées au deuxième nœud de communication en cas de non supporter simultanément la réception et la transmission des données de réseau EUTRA dans une plage de bande correspondant à la première combinaison de valeurs d'indice et la réception et la transmission des données de service de proximité dans une plage de bande correspondant à la deuxième combinaison de valeurs d'indice, dans lequel chacune de la première combinaison de valeurs d'indice et de la deuxième combinaison de valeurs d'indice comprend une ou plusieurs valeurs d'index, et chaque valeur d'index dans la ou les valeurs d'index est respectivement véhiculée dans une unité d'information de paramètre de bande.

9. Dispositif pour traiter des informations sur une capacité de support de service de proximité, qui est disposé sur un deuxième nœud de communication et comprend :
un module de réception (50), configuré pour recevoir des informations indicatives rapportées par le premier nœud de communication, dans lequel les informations indicatives sont utilisées pour indiquer des informations sur une capacité de support de service de proximité du premier nœud de communication ; et
un module d'allocation (60), configuré pour allouer une ressource de service de proximité et/ou une ressource de service de réseau cellulaire au premier nœud de communication en fonction des informations indicatives ;
dans lequel le premier nœud de communication est un équipement utilisateur, UE, et le deuxième nœud de communication est une station de base ;
dans lequel les informations sur la capacité de support de service de proximité comprennent :
des informations indicatives sur des bandes de liaison montante sur lesquelles l'UE supporte une réception et une transmission de services de proximité ; et
des indications, pour une combinaison de bandes particulière, des bandes sur lesquelles l'UE supporte simultanément la réception de communication cellulaire et des services de proximité ;
dans lequel le service de proximité comprend au moins l'un des suivants : une découverte ProSe et une communication ProSe ; les bandes de liaison montante sont des fréquences de liaison montante configurées dans un système auquel est connecté le premier nœud de communication ou dans lequel réside actuellement le premier nœud de communication ; et le système comprend au moins l'un des suivants : Accès à radio terrestre universel évolué, EUTRA, et Accès à radio terrestre universel, UTRA ;
**caractérisée en ce que**,
une relation correspondante entre toutes les plages de bande de service de proximité supportées par un récepteur et/ou un émetteur dédié au service de proximité et des valeurs d'indice de bande est pré-configurée par le premier nœud de communication avec le deuxième nœud de communication, dans lequel chaque plage de bande de service de proximité dans la relation correspondante correspond respectivement à une valeur d'indice de bande ;
dans lequel les informations indicatives rapportées par le premier nœud de communication comprennent des informations indicatives sur l'obtention du récepteur et/ou de l'émetteur dédié au service de proximité au cas où le premier nœud de communication configure avec le récepteur et/ou l'émetteur dédié au service de proximité ; et /ou
les informations indicatives rapportées par le premier nœud de communication comprennent une pluralité de combinaisons de valeurs d'indice au cas où le premier nœud de communication acquiert des valeurs d'indice correspondant à diverses bandes depuis la relation correspondante lorsque le récepteur et/ou l'émetteur dédié au service de proximité configuré par le premier nœud de communication fonctionne sur une pluralité de bandes.

10. Dispositif selon la revendication 9, dans lequel,
le module d'allocation (60) comprend :
une première unité de détermination (600), configurée pour déterminer que le premier nœud de communication possède de la capacité de support de service de proximité, mais ne supporte pas la réception et la transmission des données de service simultanément dans une pluralité de plages de bande en fonction des informations indicatives ; et
une première unité d'allocation (602), configurée pour allouer la ressource de service de proximité et la ressource de service de réseau cellulaire au premier nœud de communication par l'intermédiaire d'un mode de multiplexage à répartition temporelle ;
ou allouer une ressource de découverte ProSe et la ressource de service de réseau cellulaire au premier nœud de communication seulement par l'intermédiaire du mode de multiplexage à répartition temporelle ;
le module d'allocation (60) comprend :
une deuxième unité de détermination (604), configurée pour déterminer que le premier nœud de communication possède de la capacité de support de service de proximité et supporte la réception et la transmission des données de service simultanément dans une pluralité de plages de bande en fonction des informations indicatives ; et
une deuxième unité d'allocation (606), configurée pour allouer la ressource de service de proximité et la ressource de service de réseau cellulaire au premier nœud de communication par l'intermédiaire d'un mode de multiplexage à répartition temporelle ; ou allouer la ressource de service de proximité et la ressource de service de réseau cellulaire au premier nœud de communication par l'intermédiaire d'un mode de multiplexage à répartition fréquentielle ; ou allouer une ressource de découverte ProSe et la ressource de service de réseau cellulaire au premier nœud de communication par l'intermédiaire du mode de multiplexage à répartition temporelle et allouer une ressource de communication ProSe et la ressource de service de réseau cellulaire au premier nœud de communication par l'intermédiaire du mode de multiplexage à répartition fréquentielle.
